Europäisches Patentamt

European Patent Office

Office européen des brevets

(11) Numéro de publication : **0 419 337 B1**

## (12) FASCICULE DE BREVET EUROPEEN

(45) Date de publication du fascicule du brevet :
**29.03.95 Bulletin 95/13**

(51) Int. Cl.⁶ : **H04B 14/02, H04L 25/48**

(21) Numéro de dépôt : **90402557.4**

(22) Date de dépôt : **17.09.90**

(54) **Procédé de codage d'un signal numérique, codeur et décodeur pour la mise en oeuvre de ce procédé, procédé de régénération et régénérateur correspondant.**

(30) Priorité : **19.09.89 FR 8912274**

(43) Date de publication de la demande :
**27.03.91 Bulletin 91/13**

(45) Mention de la délivrance du brevet :
**29.03.95 Bulletin 95/13**

(84) Etats contractants désignés :
**DE GB**

(56) Documents cités :
**EP-A- 0 102 815**

(56) Documents cités :
**IEEE TRANSACTIONS ON COMMUNICA-
TIONS, vol. COM-31, no. 4, avril 1983, pages
518-527, IEEE, New York, US; I. GARRETT:
"Pulse-position modulation for transmission
over optical fibers with direct or heterodyne
detection"
IBM TECHNICAL DISCLOSURE BULLETIN,
vol. 29, no. 1, juin 1986, pages 280-282,New
York, US; "Time division pulse modulation"**

(73) Titulaire : **FRANCE TELECOM
6, Place d'Alleray
F-75015 Paris (FR)**

(72) Inventeur : **Pophillat, Lucien
Croix Rolland Rospez
F-22300 Lannion (FR)**

(74) Mandataire : **Signore, Robert et al
c/o BREVATOME
25, rue de Ponthieu
F-75008 Paris (FR)**

EP 0 419 337 B1

## Description

La présente invention a pour objet un procédé de codage d'un signal numérique binaire sous la forme d'impulsions unipolaires de durée constante pouvant prendre plusieurs positions à l'intérieur d'un intervalle de temps égal à la durée d'un temps bit. L'invention a aussi pour objet un codeur et un décodeur mettant en oeuvre ce procédé. L'invention a enfin pour objet un procédé de régénération et un régénérateur pour un signal bruité codé suivant ledit procédé. Cette invention trouve une application particulièrement intéressante dans les systèmes de transmission numérique sur fibre optique utilisant la détection directe.

Le code naturel, et aussi le plus simple pour la transmission d'un signal numérique, est le code NRZ (Non Retour à Zéro) appelé également binaire pur. On connaît de nombreux autres codes. On distingue usuellement les codes qui apportent une modification au format du signal numérique et les codes qui consistent à ajouter des bits supplémentaires, ce qui augmente le débit mais ne modifie pas le format du signal numérique. Parmi les premiers, on peut citer comme exemple le code RZ (Retour à Zéro), le code AMI (Alternate Mark Inversion), le code CMI (Coded Mark Inversion), le code de Miller. Les seconds sont du type nBmB, c'est-à-dire qu'à n bits ils font correspondre m bits, avec m>n. Ils peuvent être utilisés pour réaliser un précodage préalablement à un codage suivant un des premiers codes cités.

Ces codes sont utilisés pour satisfaire à des besoins spécifiques tels que la facilité de récupération de l'horloge, la possibilité de détecter les erreurs de transmission, la compatibilité du spectre d'énergie du signal codé avec le support de transmission.

Pour ce qui est des systèmes de transmission numérique sur fibre optique utilisant la détection directe, les codes procurant la meilleure sensibilité, ou en d'autres termes, les codes autorisant la plus faible puissance optique moyenne à l'entrée du photorécepteur pour un taux d'erreur donné sur le signal binaire régénéré, sont les codes NRZ et RZ. C'est la raison pour laquelle ces codes sont utilisés dans les principales expériences de transmission recherchant la performance en sensibilité. On peut trouver un recensement de ces expériences dans l'article de B.L. KASPER et J.C. CAMPBELL, intitulé : "Multigigabit-per-second avalanche photodiode lightwave receivers", publié dans "Journal of Lightwave Technology", vol. LT-5, n° 10, Oct. 1987, p. 1361.

La présente invention a pour but de transmettre un signal numérique par un système à fibre optique utilisant le détection directe avec une meilleure sensibilité que celle procurée par un code NRZ ou RZ. A cette fin, il est fait observer qu'un signal NRZ ou RZ est constitué d'une impulsion pour chaque "1". Dans un signal numérique, tous les "1" ne sont pas isolés et des motifs binaires simples comme par exemple deux "1" consécutifs se répètent souvent. Par ailleurs, on peut modifier la position temporelle de l'impulsion à l'intérieur du temps bit afin d'obtenir une information supplémentaire à l'information binaire en présence ou en absence de l'impulsion. Il est donc possible de remplacer par exemple deux "1" consécutifs par une seule impulsion, l'information supplémentaire alors véhiculée par l'impulsion étant repérée par une modification de sa position temporelle à l'intérieur du temps bit. La réduction ainsi obtenue du nombre moyen d'impulsions par unité de temps entraîne une diminution de la puissance optique moyenne transmise et par conséquent une augmentation de la sensibilité.

Cette augmentation de la sensibilité n'est réelle que si la probabilité d'erreur relative à la décision entre deux positions temporelles adjacentes de l'impulsion n'est pas supérieure à la probabilité d'erreur relative à la décision entre la présence ou l'absence de l'impulsion.

L'invention permet de satisfaire à cette condition ce qui la démarque d'un procédé de codage connu, dit DPPM (Digital Pulse Position Modulation) qui, lui aussi code le signal numérique sous forme d'impulsions unipolaires de durée constante pouvant prendre plusieurs positions temporelles à l'intérieur d'un intervalle de temps.

On va donc rappeler, pour une meilleure compréhension de l'apport de l'invention, le mode de fonctionnement de la modulation DPPM. On peut trouver par ailleurs une étude détaillée de la DPPM appliquée aux transmissions par fibre optique dans l'article de I. GARRETT intitulé : "Pulse-position modulation for transmission over optical fibers with direct or heterodyne detection", publié dans IEEE Transactions on communications, vol. COM-31, n° 4, April 1983, pp. 518-527.

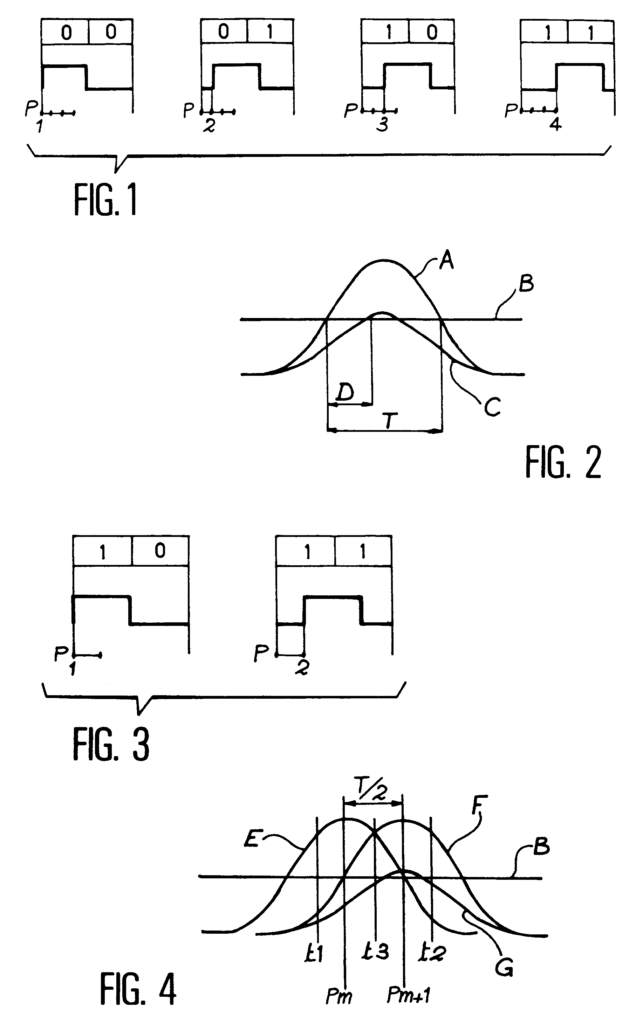

On a représenté sur la figure 1 annexée un exemple simple de codage DPPM dans lequel le signal numérique a été découpé en cellules de deux bits. On obtient ainsi quatre cellules ayant des compositions binaires différentes auxquelles on associe quatre positions temporelles de l'impulsion, soit $P_1$ à $P_4$. De plus, la durée d'impulsion est choisie égale à la durée du temps bit. Il est possible de prendre une durée d'impulsions plus courte, mais cela nécessiterait une bande passante plus élevée pour la transmission du signal. On voit clairement que, dans ces conditions, l'intervalle de temps séparant deux positions temporelles adjacentes d'impulsions ne peut pas dépasser le quart du temps bit.

L'extraction de l'information de position temporelle d'une impulsion pour la régénération d'un signal DPPM est illustrée sur la figure 2.

Sur cette figure, on a représenté une impulsion A de largeur à mi-hauteur T. Cette impulsion n'est pas rectangulaire mais a une forme particulière donnée par la fonction de transfert du filtre précédant le circuit de décision, destiné de manière connue à maximaliser le rapport entre l'amplitude crête de l'impulsion et le niveau de bruit. L'impulsion A est comparée à un seuil B situé généralement à mi-hauteur de son amplitude crête. On a représenté également une impulsion C affectée d'une composante de bruit telle que son amplitude crête soit légèrement supérieure au seuil B. Ainsi, la décision concernant la présence de l'impulsion C peut être prise sans erreur. De manière connue, l'information prise en compte pour déterminer la position temporelle d'une impulsion, dans le cas de la régénération de signal DPPM, provient de la date à laquelle le front montant de cette impulsion croise le seuil B. L'erreur D sur cette date peut ainsi atteindre une valeur proche de + T/2 avant que la composante de bruit affectant une impulsion n'entraîne une décision erronée concernant la présence ou l'absence d'impulsion.

Lorsque l'intervalle de temps séparant deux positions temporelles adjacentes est égal à T/4, comme dans l'exemple de la figure 1, l'erreur sur la position de l'impulsion doit être inférieure à ± T/8 pour ne pas conduire à la présence d'erreurs dans le signal binaire régénéré. Selon le mode de régénération d'un signal DPPM illustré sur la figure 2, la probabilité d'erreur relative à la décision entre deux positions d'impulsion espacées de T/4 sera donc supérieure à la probabilité d'erreur relative à la décision entre présence ou absence d'impulsion, ce qui présente un inconvénient.

On connaît également par le document EP-A-0 102 815 un système de communications optiques utilisant la technique de modulation en impulsions codées (DPPM). Dans ce système, les bits sont organisés en groupes (par exemple en quartet). A chaque groupe correspond une fenêtre et à chaque fenêtre correspond une position d'impulsion. Ces impulsions sont obtenues en utilisant un laser à modes verrouillés. A la fin de chaque intervalle de transmission, il existe un intervalle de garde entre la dernière impulsion possible et la première impulsion possible suivante.

Dans cette technique, les motifs numériques ont tous le même nombre de bits (par exemple 4) et l'on détecte systématiquement et périodiquement la présence de ces motifs dans le signal, c'est-à-dire tous les 4 bits. Il ne peut pas exister de motifs de 4 bits qui ne soient l'un des motifs prédéfinis. Une impulsion est donc nécessairement émise tous les 4 bits.

Cette technique, qui supposent des intervalles de temps très faible entre les différentes positions d'impulsions, nécessite l'utilisation d'un laser à mode verrouillé, pour obtenir la précision requise et réduire les risques d'erreur.

La présente invention a justement pour but de remédier à ces inconvénients.

A cette fin, il est prévu, dans l'invention, que les motifs peuvent avoir un nombre de bits quelconques (par exemple 2, 3 ou 4) et que la recherche de ces motifs s'effectue au fur et à mesure que le signal arrive et sans périodicité prédéfinie. Si l'un des motifs prédéterminés est détecté, une impulsion est émise avec la position appropriée mais si aucun de ces motifs n'est détecté, aucune impulsion n'est émise.

Par ailleurs, la détection suivante de présence d'un motif s'effectue à partir du bit qui suit le dernier bit du motif dont la présence a été détectée et ce rapport n'est pas nécessairement périodique puisqu'il dépend de la taille des divers motifs détectés. Par exemple, on pourra définir seulement deux motifs (par exemple 1,0 et 1,1) et non pas 4 comme illustré sur la figure 1 à propos de la technique classique DPPM. Cela permet d'utiliser un intervalle de temps égal au demi temps de bit alors que, dans l'art antérieur, cet intervalle de temps est moitié moins grand et égal au quart du temps bit.

De façon précise, la présente invention a pour objet un procédé de codage par impulsion d'un signal numérique formé de bits occupant chacun un intervalle de temps dit "temps bit", dans lequel on a prédéfini des motifs numériques formés d'une suite prédéfinie de bits, on détecte ces motifs dans le signal à coder, on fait correspondre à chacun des motifs une position dans l'intervalle de temps bit et on émet pour chaque motif détecté une impulsion unique ayant la position correspondante, ce procédé étant caractérisé par le fait que :
- l'ensemble des motifs numériques prédéfinis ne comprend pas tous les motifs ayant un nombre de bits prédéterminés mais certains motifs à deux ou plus de deux bits,
- on détecte la présente de l'un quelconque de ces motifs sans périodicité fixe prédéterminée mais dès qu'il apparaît dans le signal,
- lorsqu'un tel motif est détecté on émet une impulsion avec une position temporelle qui correspond à ce motif et lorsqu'aucun motif n'est détecté, aucune impulsion n'est émise,
- on reporte la prochaine détection de présence éventuelle d'un motif à partir du bit suivant le dernier bit du motif binaire dont la présence a été détectée.

Le temps bit auquel on réalise la détection de présence éventuelle d'un motif binaire correspond au premier bit ou bien au dernier bit de ce motif binaire.

La durée de l'impulsion peut être quelconque. De manière préférée, cette durée vaut 2T/n.

La composition des motifs binaires peut également être quelconque. Il est bien entendu avantageux de choisir des motifs binaires qui minimisent le nombre moyen d'impulsions émises par unité de temps. Lorsque le signal numérique à coder peut contenir de longues suites de "0" consécutifs, il est alors intéressant qu'un des motifs ne contienne également que des "0" afin que la durée maximale séparant deux impulsions consécutives ne soit pas trop importante.

Cela facilite la récupération de l'horloge et diminue le niveau des composantes à basse fréquence du spectre d'énergie du signal codé.

On peut ainsi détecter la présence des motifs binaires suivants, donnés à titre explicatif mais non limitatif : "10" et "11", ou bien "10", "110" et "111", ou bien "11", "100" et "101" ou bien "10", "11" et un nombre quelconque de "0" consécutifs, ou bien "10", "110", "1110" et "1111", ou bien "100", "110", "111" et "101", ou bien "10", "110", "111" et un nombre quelconque de "0" consécutifs, ou bien "100", "11", "101" et un nombre quelconque de "0" consécutifs.

L'invention a aussi pour objet un codeur pour la mise en oeuvre de ce procédé. Il comprend un moyen pour détecter, à chaque temps bit, la présence éventuelle d'un motif binaire parmi n motifs binaires, un moyen pour produire, lorsque la présence d'un motif binaire est détectée, une impulsion occupant une position temporelle correspondant audit motif binaire et un moyen pour reporter alors la prochaine détection à partir du bit suivant le dernier bit dudit motif binaire dont la présence est détectée.

L'invention a aussi pour objet un décodeur pour fournir un signal numérique binaire à partir d'un signal codé selon le procédé de l'invention comprenant un moyen pour détecter la présence d'une impulsion occupant une position temporelle parmi n positions temporelles et un moyen pour produire, lorsqu'une impulsion est détectée dans une position temporelle, un motif binaire correspondant à cette position temporelle.

L'invention a encore pour objet un procédé de régénération d'un signal bruité codé suivant le procédé de codage défini plus haut qui consiste à réaliser un premier test sur un premier signal afin de prendre une décision optimale entre l'absence et la présence d'une impulsion et au moins un deuxième test sur au moins un deuxième signal afin de prendre une décision optimale entre deux positions temporelles adjacentes.

Un mode d'obtention d'un deuxième signal consiste à effectuer la différence entre les amplitudes du signal codé préalablement filtré à deux dates espacées d'une durée égale à la durée d'une impulsion du signal codé.

Un autre mode d'obtention d'un deuxième signal consiste à prélever la pente du signal codé préalablement filtré.

L'invention a enfin pour objet un régénérateur mettant en oeuvre le procédé de régénération défini plus haut et comprenant un moyen pour réaliser un test d'absence-présence d'impulsion pour chacune des n positions temporelles, un moyen pour réaliser un test de validation de présence d'impulsion pour chacune des n positions temporelles, un ensemble de n opérateurs logiques pour effectuer les opérations de validation, un moyen pour inhiber toute détection de présence validée d'impulsion dans les deux positions temporelles suivant la position temporelle dans laquelle la présence validée d'une impulsion est détectée, un moyen pour produire, lorsque la présence validée d'une impulsion est détectée dans une position temporelle, un motif binaire correspondant à cette position temporelle, un moyen de récupération de l'horloge du signal transmis et une base de temps pour produire les signaux de commande des tests d'absence-présence d'impulsion et de validation de présence d'impulsion pour chacune des n positions temporelles.

Les caractéristiques et avantages de l'invention ressortiront mieux de la description qui va suivre, donnée à titre explicatif mais non limitatif, en référence aux figures annexées sur lesquelles :

- la figure 1, déjà décrite, donne un exemple connu de codage selon la DPPM,
- la figure 2, déjà décrite, illustre un procédé connu d'obtention de l'information de position temporelle d'une impulsion,
- la figure 3 illustre le principe du codage selon l'invention,
- la figure 4 montre le procédé d'obtention de l'information de position temporelle d'une impulsion,
- la figure 5 représente des exemples de signaux obtenus selon le procédé de codage de l'invention,
- la figure 6 est un schéma fonctionnel d'un codeur pour engendrer un signal selon le procédé de codage de l'invention,
- la figure 7 est un schéma fonctionnel d'un décodeur pour la restitution sous forme binaire d'un signal produit par un codeur conforme à l'invention,
- la figure 8 est un chronogramme illustrant le procédé de régénération de l'invention,
- les figures 9a et 9b illustrent l'incidence d'un filtrage passe-bas respectivement sur la forme d'un signal codé et sur le rapport entre les écarts d'amplitude relatifs à ce signal codé aux dates des tests et le niveau de bruit,
- la figure 10 illustre un mode de production de deux signaux supplémentaires pour améliorer la probabilité d'erreur relative à la validation de présence d'impulsion dans une position temporelle lorsque le signal à régénérer est le signal J de la figure 5,
- la figure 11 représente un mode de réalisation d'un régénérateur pour la restitution sous forme binaire d'un signal produit par un codeur conforme à l'invention et issu d'une transmission,
- les figures 12a et 12b représentent un mode de réalisation d'un moyen pour réaliser un test de validation de présence d'impulsion respectivement pour chacune des n positions temporelles et pour chacune des deux positions temporelles lorsque le signal à régénérer est le signal J de la figure 5,

- les figures 13a et 13b représentent deux modes de réalisation d'un moyen pour produire un signal apte à la réalisation d'un test de validation de présence d'impulsion,
- les figures 14a, 14b, 14c représentent des modes de réalisation d'un moyen pour récupérer l'horloge du signal transmis.

Le principe de l'invention peut être expliqué en liaison avec les figures 3 et 4, qui sont à comparer avec les figures 1 et 2 déjà décrites à propos de l'art antérieur.

Sur la figure 3 est représenté un exemple de codage selon l'invention utilisant une impulsion de même durée que sur la figure 1. Dans cet exemple, les motifs binaires "10" et "11" sont représentés respectivement par une impulsion en position temporelle $P_1$ et une impulsion en position temporelle $P_2$. La présence de ces motifs binaires n'est pas détectée avec une périodicité constante comme on le fait pour la DPPM, mais avec une périodicité quelconque, c'est-à-dire que la présence d'un motif binaire est détectée dès qu'il apparaît. Lorsque la présence d'aucun de ces deux motifs binaires n'est détectée, aucune impulsion n'est émise. On peut, de cette façon, coder un signal binaire quelconque. Dans cet exemple de codage selon l'invention, deux positions temporelles d'impulsion suffisent, ce qui permet d'allouer un intervalle de temps entre deux positions temporelles adjacentes égal à la moitié du temps bit.

Un avantage de codage illustré par la figure 3, en comparaison du codage illustré par la figure 1, réside dans le fait que l'intervalle de temps entre deux positions temporelles adjacentes est deux fois plus grand. Cet avantage se traduit par une plus faible probabilité d'erreur relative à la décision entre deux positions temporelles adjacentes dans des conditions identiques de rapport signal à bruit et conduit par conséquent à une augmentation de la sensibilité.

Un autre avantage concerne le nombre moyen d'impulsions transmises par unité de temps. Dans l'exemple représenté sur la figure 1, on remarque que l'on transmet systématiquement une impulsion pour deux bits. En revanche, dans l'exemple représenté sur la figure 3, on transmet parfois une impulsion pour un "1" et parfois une impulsion pour deux "1". On transmet donc ainsi en moyenne moins de une impulsion pour deux bits en considérant toutefois que le signal numérique à coder est équilibré, c'est-à-dire qu'il contient en moyenne autant de "1" que de "0". Cette valeur inférieure du nombre moyen d'impulsions transmises par unité de temps conduit également à une augmentation de la sensibilité.

L'invention permet de régénérer un signal codé selon le procédé avec une probabilité d'erreur, relative à la décision entre deux positions temporelles adjacentes, plus faible que celle obtenue selon le mode d'obtention de l'information de position temporelle illustré sur la figure 2. A cette fin, l'information utilisée pour déterminer la position temporelle d'une impulsion n'est plus la date à laquelle le front montant de cette impulsion croise un seuil, mais l'amplitude d'un nouveau signal dont deux modes de production vont être illustrés en référence à la figure 4.

Sur cette figure, on a représenté deux impulsions E et F de largeur à mi-hauteur T et identiques à l'impulsion A, et une impulsion 6 identique à l'impulsion C. L'impulsion E est centrée dans une position temporelle quelconque $P_m$ et les impulsions F et G sont centrées dans la position temporelle $P_{m+1}$ telle que $P_{m+1}-P_m=T/2$. Ainsi, les impulsions E et F occupent deux positions temporelles espacées de T/2, comme dans l'exemple de la figure 3.

Un mode d'obtention de l'information de position temporelle des impulsions E ou F consiste à prélever l'amplitude aux dates $t_1$ et $t_2$ telles que $t_1=P_m-T/4$ et $t_2=P_{m+1}+T/4$. C'est en effet aux dates $t_1$ et $t_2$ que l'écart entre les amplitudes des impulsions E et F est maximal. Ainsi, lorsque la différence entre l'amplitude à la date $t_2$ et l'amplitude à la date $t_1$ est négative, on peut en déduire que l'on est en présence d'une impulsion centrée dans la position temporelle $P_m$. De même, lorsque la différence entre l'amplitude à la date $t_2$ et l'amplitude à la date $t_1$ est positive, on peut en déduire que l'on est en présence d'une impulsion centrée dans la position temporelle $P_{m+1}$.

Un autre mode d'obtention de l'information de position temporelle des impulsions E ou F consiste à prélever la pente à la date $t_3$ centrée entre les positions temporelles $P_m$ et $P_{m+1}$. C'est en effet à la date $t_3$ que l'écart entre les pentes des impulsions E et F est maximal. Ainsi, lorsque la pente à la date $t_3$ est négative, on peut en déduire que l'on est en présence d'une impulsion centrée dans la position temporelle $P_m$. De même, lorsque la pente à la date $t_3$ est positive, on peut en déduire que l'on est en présence d'une impulsion centrée dans la position temporelle $P_{m+1}$.

Selon l'un ou l'autre des deux modes d'obtention de l'information de position temporelle d'une impulsion précédemment décrits, la décision concernant la position temporelle de l'impulsion G ne sera pas erronée. Il est clair, en effet, d'une part, que la différence entre les amplitudes de l'impulsion G aux dates $t_2$ et $t_1$ est positive et, d'autre part, que la pente de l'impulsion G à la date $t_3$ est positive.

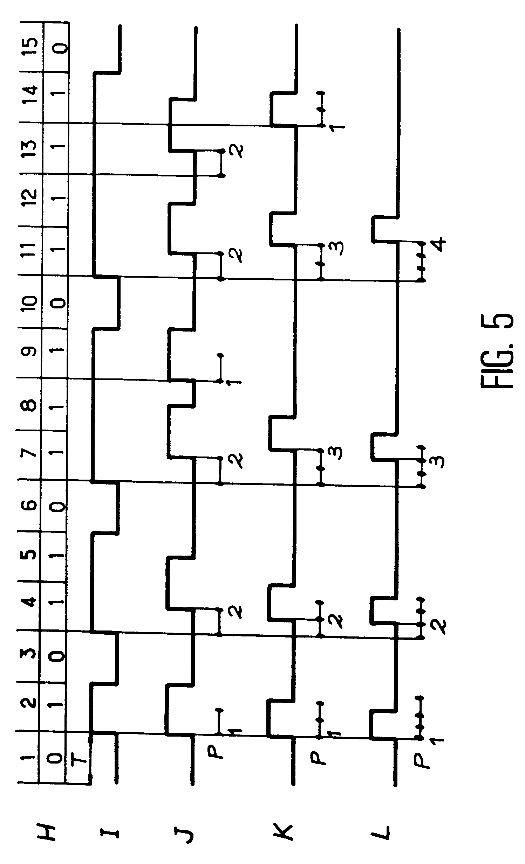

On va maintenant expliquer plus en détail le procédé de codage de l'invention en se référant aux signaux de la figure 5. Sur cette figure, on a représenté en H une séquence binaire de période T comprenant 15 bits numérotés de 1 à 15. Cette séquence comporte des exemples de motifs binaires dont il est avantageux de détecter la présence selon l'invention. Le signal I est un signal numérique en format NRZ correspondant à la séquence H.

Les signaux J, K et L sont des signaux codés selon le procédé de l'invention dans lesquels les impulsions peuvent prendre deux positions temporelles $P_1$ et $P_2$ correspondant respectivement aux motifs binaires "10" et "11" (signal J), trois positions temporelles $P_1$, $P_2$ et $P_3$ correspondant respectivement aux motifs binaires "10", "110" et "111" (signal K), quatre positions temporelles $P_1$, $P_2$, $P_3$ et $P_4$ correspondant respectivement aux motifs binaires "10", "110", "1110" et "1111" (signal L).

Ainsi, la première impulsion du signal J, dont le front de montée est en position temporelle $P_1$ du temps bit n°2, correspond au motif binaire "10" composé des bits n°2 et 3, et dont la présence est détectée au temps bit n°2. La deuxième impulsion du signal J, dont le front de montée est en position temporelle $P_2$ du temps bit n°4 correspond au motif binaire "11" composé des bits n°4 et 5, et dont la présence est détectée au temps bit n°4.

De même, par exemple, la deuxième impulsion du signal K, dont le front de montée est en position temporelle $P_2$ du temps bit n°4, correspond au motif binaire "110" composé des bits n°4, 5 et 6, et dont la présence est détectée au temps bit n°4, et la dernière impulsion du signal L, dont le front de montée est en position temporelle $P_4$ du temps bit n°11, correspond au motif binaire "1111" composé des bits n°11, 12, 13 et 14, et dont la présence est détectée au temps bit n°11.

Selon une caractéristique du procédé selon l'invention, les intervalles de temps séparant deux positions temporelles adjacentes relativement aux signaux J, K et L sont respectivement égaux à T/2, T/3 et T/4.

Selon une caractéristique préférée du procédé selon l'invention, les durées des impulsions relatives aux signaux J, K et L sont respectivement égales à T, 2T/3 et T/2.

Les signaux codés selon le procédé de l'invention tels que les signaux J, K ou L peuvent être utilisés avec intérêt dans les systèmes de transmission par fibre optique, qui utilisent la détection directe. On peut également les utiliser sous la forme d'une modulation d'amplitude d'une porteuse optique en association avec une détection cohérente (hétérodyne ou homodyne), mais avec un intérêt moindre, car en détection cohérente, la modulation d'amplitude est moins performante, en termes de sensibilité, que d'autres modulations telles que la modulation de phase de la porteuse optique.

Le signal J, dont les impulsions ont une durée égale à T, nécessite pour sa transmission la même largeur de bande que le signal I de type NRZ. Les signaux K et L nécessitent pour leur transmission des largeurs de bande supérieures, inversement proportionnelles à la durée de leurs impulsions respectives.

On peut remarquer également que, pour une même amplitude d'impulsion, la puissance moyenne relative au signal K est plus faible que la puissance moyenne relative au signal J. En effet, les impulsions du signal K, comparées aux impulsions du signal J, ont une durée inférieure et leur nombre moyen par unité de temps est également inférieur. La même remarque s'applique entre les signaux L et K.

Les éléments influant sur le choix entre par exemple les signaux J, K et L sont donc d'une part les caractéristiques du canal de transmission concernant la largeur de bande et le rapport signal à bruit à la sortie du récepteur associé à cette largeur de bande, et d'autre part les caractéristiques de la source d'émission concernant la puissance maximale pouvant être émise. Cette puissance maximale peut être une puissance crête et, dans ce cas, le signal J qui présente le plus faible rapport entre la puissance crête et la puissance moyenne est le mieux adapté, ou bien elle peut être une puissance moyenne ce qui favorise alors le signal L.

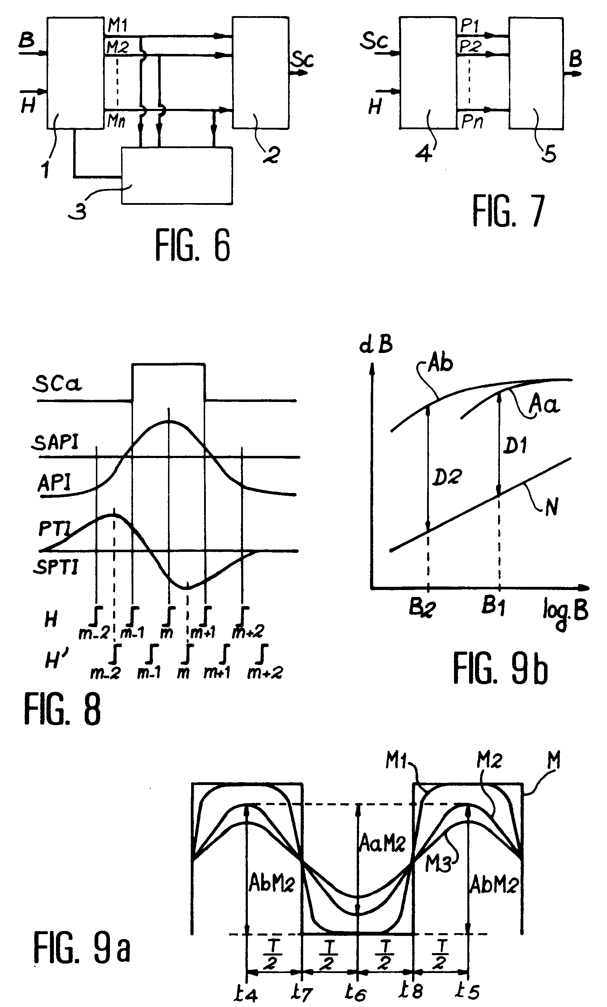

Un schéma fonctionnel d'un codeur pour la production de signaux le procédé de codage de l'invention est représenté sur la figure 6. Ce codeur comprend un moyen 1 recevant le signal numérique binaire B à coder ainsi que son signal d'horloge H, chargé de détecter, à chaque temps bit, la présence éventuelle d'un motif binaire parmi des motifs binaires $M_1$ à $M_n$, un moyen 2 pour produire, lorsque la présence d'un motif binaire est détectée, une impulsion occupant une position temporelle correspondant à ce motif binaire, la succession des impulsions ainsi produites formant le signal codé SC, et un moyen 3 pour reporter la prochaine détection, lorsque la présence d'un motif binaire est détectée, à partir du bit suivant le dernier bit de ce motif binaire.

Le signal codé produit par le codeur de la figure 6 est transmis par exemple à une source laser en vue de sa transmission par fibre optique. Il peut être intéressant de décoder le signal au niveau de la sortie du codeur en vue de vérifier son bon fonctionnement. Comme on est alors en présence de signaux bien calibrés et exempts de bruit, et que l'on dispose de l'horloge, on peut utiliser pour cela un décodeur, plus simple qu'un régénérateur.

Un schéma fonctionnel d'un tel décodeur est représenté sur la figure 7. Il comprend un moyen 4 recevant le signal codé SC et le signal d'horloge H et détectant, lorsqu'une impulsion est reçue, sa position temporelle $P_1$ à $P_n$ et un moyen 5 pour produire, lorsqu'une impulsion est détectée dans une position temporelle, un motif binaire correspondant à ladite position, temporelle, la succession de ces motifs binaires formant un signal numérique binaire B identique à celui reçu par le codeur.

Les moyens 1 à 5 peuvent être réalisés à l'aide de circuits logiques conventionnels, dont la mise en oeuvre est connue de l'homme de l'art.

Lorsque le signal codé produit par le codeur de la figure 6 est issu d'une transmission, sa conversion en signal numérique est réalisée au moyen d'un régénérateur. Une caractéristique importante d'un tel régénérateur concerne le taux d'erreur binaire obtenu sur le signal numérique régénéré en fonction du rapport signal à bruit sur son entrée. Dans le cas d'une transmission par fibre optique, cette caractéristique influe directement sur la sensibilité à l'entrée du récepteur optique et par conséquent sur la portée de la liaison. Le procédé de régénération de l'invention permet de convertir en signal numérique un signal bruité codé selon le procédé de l'invention avec une probabilité d'erreur minimale. Pour cela, on produit, d'une part, un signal API pour prendre une décision entre absence et présence d'impulsion avec une probabilité d'erreur minimale et, d'autre part, un signal PTI pour prendre une décision entre deux positions temporelles d'impulsion adjacentes avec une probabilité d'erreur minimale.

On va maintenant expliquer le procédé de régénération de l'invention en se référant au chronogramme de la figure 8. Sur cette figure, on a représenté un signal codé SCa comprenant une impulsion qui occupe une position temporelle quelconque $P_m$. On a représenté également les signaux API et PTI issus du signal SCa dont les amplitudes sont comparées respectivement aux seuils SAPI et SPTI.

La position du seuil SAPI est ajustée pour minimaliser la probabilité d'erreur relative au test sur le signal API. Lorsque le niveau de bruit affectant le signal API a la même valeur en absence et en présence d'impulsion, le seuil SAPI est situé à mi-hauteur d'une impulsion du signal API. Dans le cas de la régénération d'un signal codé issu d'une transmission par fibre optique, notamment lorsque l'on utilise une photodiode à avalanche pour la réception du signal optique, le niveau de bruit à la sortie du récepteur optique est nettement plus élevé en présence qu'en absence d'impulsion. Cela vient de ce qu'en présence d'une impulsion optique, un bruit de grenaille s'ajoute au bruit de fond, principalement thermique, du photo-récepteur. Aussi, dans ce cas, le seuil SAPI minimalisant la probabilité d'erreur relative au test sur le signal API n'est plus situé à mi-hauteur d'une impulsion du signal API, mais il est situé dans une position le rapprochant de l'amplitude du signal API en absence d'impulsion.

La position du seuil SPTI est ajustée pour minimaliser la probabilité d'erreur relative au test sur le signal PTI. Pour des raisons évidentes de symétrie, la position du seuil SPTI coïncide toujours, indépendamment de la nature du bruit affectant le signal codé, avec l'amplitude du signal PTI en absence d'impulsion.

Les signaux $H_{m-2}$ à $H_{m+2}$ sont des fronts d'horloge indiquant les dates des tests effectués sur les signaux API et PTI pour détecter la présence d'une impulsion dans les positions temporelles respectives $P_{m-2}$ à $P_{m+2}$. Le front d'horloge $H_m$ coïncide, d'une part, avec la date à laquelle l'amplitude du signal API passe par un maximum et, d'autre part, avec la date à laquelle l'amplitude du signal PTI est égale à la différence entre l'amplitude à la date $P_m+3T/4$ et l'amplitude à la date $P_m-T/4$ du signal SCa filtré ou, selon une variante, à la pente à la date $P_m+T/4$ du signal SCa filtré.

La décision sur L'absence ou la présence d'une impulsion dans une position temporelle donnée dépend ainsi de deux conditions. A la date du test correspondant à cette position temporelle, il faut que l'amplitude du signal API soit supérieure au seuil SAPI et que l'amplitude du signal PTI soit inférieure au seuil SPTI.

Ainsi, dans l'exemple de la figure 8, ce premier front d'horloge autorisant la détection de présence d'impulsion dans une position temporelle est $H_m$. Cette détection inhibe ensuite la détection dans les deux positions temporelles suivantes correspondant aux fronts d'horloge $H_{m+1}$ et $H_{m+2}$.

On peut remarquer qu'à la date du test correspondant au front d'horloge $H_{m-2}$, comme cela sera illustré dans la suite en référence aux figures 9a et 9b, l'amplitude du signal API est inférieure au seuil SAPI dans toutefois en être aussi éloignée qu'en absence d'impulsion, ce qui augmente la probabilité d'une décision erronée en faveur de l'état "présence d'impulsion". Ceci n'est pas un inconvénient car le test effectué à la même date sur le signal PTI ne valide pas cette éventuelle décision erronée.

Les fronts d'horloge H' correspondent aux fronts d'horloge H retardés de T/4. Ils peuvent être utilisés pour effectuer des tests supplémentaires sur le signal PTI, destinés à confirmer, avec une probabilité d'erreur plus faible, certains des tests correspondant aux fronts d'horloge H. Ainsi, pour décider de la présence d'une impulsion dans la position temporelle $P_m$, il faut que le signal PTI soit inférieur au seuil SPTI pour les deux tests correspondant à $H_m$ et $H'_m$. On remarque, dans l'exemple de la figure 8, que seuls les tests correspondant à $H'_{m-2}$ et $H'_m$ ont un intérêt car ils ont lieu lorsque l'amplitude du signal PTI passe par des maxima. Par exemple, si, à la date du test correspondant au front d'horloge $H_{m-2}$, le signal API est affecté d'un bruit rendant son amplitude légèrement supérieure au seuil SAPI et si le signal PTI est affecté d'un bruit rendant son amplitude légèrement inférieure au seuil SPTI, le test correspondant au front d'horloge $H'_{m-2}$ permet d'éviter la fausse détection de présence d'impulsion en position temporelle $P_{m-2}$.

Le signal API est obtenu par filtrage passe-bas du signal codé. On va rappeler comment, de manière connue, un tel filtrage permet de minimaliser la probabilité d'erreur en référence aux figures 9a et 9b. La figure 9a illustre l'action d'un filtre passe-bas sur un signal M composé de deux impulsions ayant chacune une durée T et centrées sur les dates $t_4$ et $t_5$ telles que $t_5-t_4=2T$. Sur cette figure, on a représenté le signal M et trois autres signaux $M_1$, $M_2$ et $M_3$ obtenus par fil-

trage passe-bas du signal M avec des largeurs de bande respectives $B_1$, $B_2$ et $B_3$ telles que $B_1$23. L'amplitude $A_a$ représente la différence entre l'amplitude aux dates $t_4$ ou $t_5$ et l'amplitude à la date $t_6$ centrée entre les dates $t_4$ et $t_5$ du signal M filtré. Elle correspond à l'écart entre les amplitudes relatives aux états "0" et "1" dans le cas de la régénération d'un signal NRZ de période d'horloge T. Dans ce cas, en effet, les tests réalisés afin de prendre la décision entre les états "0" et "1" ont lieu périodiquement à des dates espacées de T dont $t_4$, $t_6$, $t_5$. L'amplitude $A_b$ représente la différence entre l'amplitude aux dates $t_4$ ou $t_5$ et l'amplitude en absence d'impulsion du signal M filtré. Elle correspond à l'écart entre les amplitudes relatives aux états "présence d'impulsion" et "absence d'impulsion" dans le cas de la régénération selon l'invention. En effet, les tests réalisés afin de prendre la décision entre les états "présence d'impulsion" et "absence d'impulsion" ont alors lieu périodiquement à des dates espacées de T/2 dont $t_4$, $t_7$, $t_6$, $t_8$, $t_5$, mais comme exposé précédemment, en référence à la figure 8, les tests aux dates $t_7$ et $t_5$ sont inhibés lorsque la présence d'une impulsion est détectée dans une position temporelle centrée sur la date $t_4$ et les tests aux dates $t_6$ et $t_5$ ne sont pas validés par les tests correspondants réalisés sur le signal PTI. On peut remarquer en observant la figure 9a où l'on a repéré les amplitudes $A_{aM_2}$ et $A_{bM_2}$ relatives au signal $M_2$ que l'amplitude $A_b$ est toujours supérieure ou égale à l'amplitude $A_a$.

La figure 9b illustre l'évolution, en échelles logarithmiques, pour une meilleure appréciation visuelle, de ces amplitudes $A_a$ et $A_b$, ainsi que de la puissance de bruit N, en fonction de la largeur de la bande B du filtre. On considère ici que la puissance de bruit N est proportionnelle à la bande B. Il apparaît clairement sur cette figure qu'il existe des largeurs de bande $B_1$ et $B_2$ pour lesquelles les différences respectives $D_{1(dB)}=A_{a(dB)}-N_{(dB)}$ et $D_{2(dB)}=A_{b(dB)}-N_{(dB)}$ sont maximales. On peut également remarquer que la largeur de bande $B_2$ est inférieure à la largeur de bande $B_1$ et que la différence $D_2$ est supérieure à la différence $D_1$. Il résulte de ce dernier point que, pour une même amplitude crête et une même durée de l'impulsion avant filtrage, et pour des conditions de bruit identiques, la probabilité d'erreur sur la décision entre état "absence d'impulsion" et état "présence d'impulsion" selon l'invention sera plus faible que la probabilité d'erreur concernant la décision entre état "0" et état "1" dans le cas de la régénération d'un signal NRZ.

Le signal PTI est produit à partir d'un signal également issu d'un filtrage passe-bas du signal codé. Selon un mode de production, on effectue la différence entre les amplitudes du signal codé préalablement filtré à deux dates espacées d'une durée égale à la durée d'une impulsion. Selon un autre mode de production, on prélève la pente du signal codé préalablement filtré. Pour chacun de ces deux modes de production, on choisit une largeur de bande de filtrage maximalisant le rapport entre les écarts d'amplitude du signal PTI aux dates des tests et le niveau de bruit.

A titre explicatif, les deux modes de production du signal PTI ont donné des résultats expérimentaux voisins. De plus, en présence d'une densité spectrale de bruit uniforme, la probabilité d'erreur relative au test sur le signal PTI était proche de la probabilité d'erreur relative au test sur le signal API.

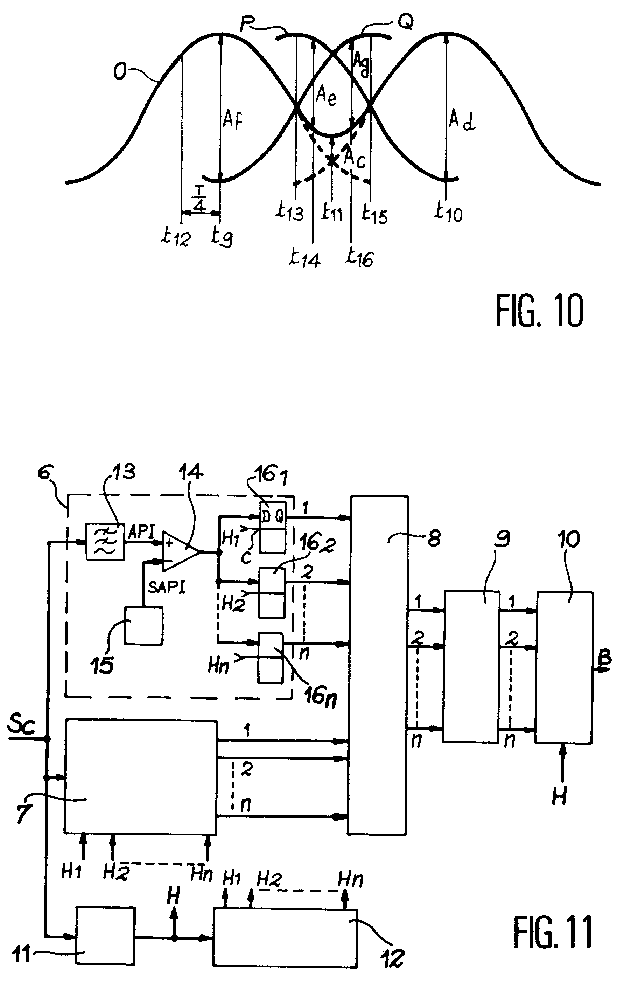

Le procédé de régénération qui vient d'être décrit peut s'appliquer aux signaux J, K ou L de la figure 5. Toutefois, en ce qui concerne le signal J, les tests sur le signal PTI correspondant ne seront pas toujours effectués de manière optimale. En effet, le signal J présente une particularité par rapport aux signaux K ou L, à savoir que l'espace entre deux impulsions consécutives peut atteindre une valeur minimale de T/2. Un exemple de cette particularité est représenté par les $3^{ième}$ et $4^{ième}$ impulsions du signal J qui occupent respectivementt une position temporelle $P_2$ correspondant au motif binaire "11" et une position temporelle $P_1$ correspondant au motif binaire suivant, "10". On va maintenant examiner l'incidence sur le signal PTI de cette configuration particulière du signal codé en se référant à la figure 10.

Sur cette figure, on a représenté un signal O correspondant à la précédente configuration particulière du signal codé. Ce signal O est issu du signal codé par filtrage propre à l'obtention du signal PTI en effectuant la différence entre les amplitudes du signal O à deux dates espacées d'un temps égal à la durée T d'une impulsion. La première impulsion du signal O, qui occupe une position temporelle $P_2$, est centrée à la date $t_9$ et la deuxième, qui occupe une position temporelle $P_1$, est centrée à la date $t_{10}$ telle que $t_{10}=t_9+3T/2$. A la date du test de présence d'impulsion dans la position temporelle centrée sur la date $t_9$, l'amplitude du signal PTI est égale à la différence entre l'amplitude du signal 0 à la date $t_{11}$ telle que $t_{11}=t_9+3T/4$ et l'amplitude du signal O à la date $t_{10}$ telle que $t_{12}=t_9-T/4$. On peut observer sur la figure 10 qu'à la date $t_{11}$, le signal O n'a pas l'amplitude qu'il aurait en l'absence de deuxième impulsion en position $p_1$. Plus précisément, à la date du test, le signal PTI aura une amplitude réduite de l'amplitude $A_c$. Ceci présente un inconvénient car il en résulte une augmentation de la probabilité d'erreur relative au test sur le signal PTI et, par conséquent, une augmentation de la probabilité d'erreur sur le signal binaire régénéré.

Il est possible de pallier cet inconvénient. En effet, dans l'exemple de la figure 10, à la date du test de présence d'impulsion dans la position temporelle centrée sur la date $t_9$, le rôle du signal PTI est de permettre de lever l'ambiguïte entre la position temporelle centrée sur la date $t_9$ et la position temporelle centrée sur la date $t_{13}$ telle que $t_{13}=t_9+T/2$. On a vu que cela ne pouvait pas se faire de manière optimale parce qu'à la date $t_{11}$ l'écart entre l'amplitude du signal O et l'amplitude du signal P représentant une impulsion centrée sur la date $t_{13}$ était réduit de l'amplitude $A_c$. Or, il existe deux dates, $t_{10}$ et $t_{14}$ telle que $t_{14} \simeq t_9 + 5T/8$ pour lesquelles les écarts, de sens opposés, entre les amplitudes des signaux O et P passent par des maxima, respectivement $A_d$ et $A_e$. De plus, la somme $A_d + A_e$ est suffisante pour permettre un test avec une probabilité d'erreur non pénalisante. On peut donc produire un signal PTI′, apte à la réalisation d'un test pour lever l'ambiguïté entre la position temporelle centrée sur la date $t_9$ et la position temporelle centrée sur la date $t_{13}$, en effectuant la différence entre les amplitudes du signal codé filtré servant à l'obtention du signal PTI à deux dates espacées d'une durée égale à $t_{10} - t_{14}$. Ainsi, à la date du test de présence d'impulsion dans la position temporelle centrée sur la date $t_9$, il y aura validation du test sur le signal API si l'amplitude du signal PTI est inférieure au seuil SPTI ou bien si l'amplitude du signal PTI′ est supérieure à un seuil SPTI′ centré dans l'intervalle d'amplitude égal à $A_d + A_e$.

On a vu en relation avec la figure 8 que le test sur le signal API à la date correspondant au front d'horloge $H_{m-2}$ est affecté d'une probabilité accrue d'une décision erronée en faveur de l'état "présence d'impulsion" et que cette éventuelle décision erronée n'est pas validée par le test sur le signal PTI. En revanche, elle peut l'être par le test sur le nouveau signal PTI′ qui, à cette date, présente une amplitude proche de son seuil. Il est donc nécessaire d'effectuer un test supplémentaire pour ne pas prendre en compte, dans ce cas, la validation relative au signal PTI′.

En se référant de nouveau à la figure 10, on remarque que ce test supplémentaire a pour but de lever l'ambiguïté entre la présence d'une impulsion centrée sur la date $t_9$ et la présence d'une impulsion, représentée par le signal Q, centrée sur la date $t_{15}$ telle que $t_{15} = t_9 + T$. On remarque également qu'aux dates $t_9$ et $t_{16}$ telle que $t_{16} \simeq t_9 + 7T/8$, les écarts, de sens opposés, entre les amplitudes des signaux O et Q passent par des maxima, respectivement $A_f$ et $A_g$. De plus, la somme $A_f + A_g$ est suffisante pour permettre un test avec une probabilité d'erreur non pénalisante. Le test supplémentaire peut donc avoir lieu sur un signal PTI″ obtenu en effectuant la différence entre les amplitudes du signal codé filtré servant à l'obtention du signal PTI à deux dates espacées d'une durée égale à $t_{16} - t_9$ qui, pour des raisons de symétrie, est aussi égale à $t_{10} - t_{14}$. Le signal PTI″ sera ainsi identique au signal PTI′ avec un décalage dans le temps égal à environ $5T/8$, et il sera comparé à un seuil SPTI″ centré dans l'intervalle d'amplitude égal à $A_f + A_g$.

La régénération d'un signal conforme au signal J de la figure 5 nécessite donc, si l'on ne veut pas dégrader la probabilité d'erreur sur le signal binaire régénéré, la mise en oeuvre de deux signaux supplémentaires PTI′ et PTI″. A la date du test correspondant à la position temporelle $P_2$, une détection de présence d'impulsion relative au signal API ne sera validée que si la relation suivante est vérifiée :

$$\overline{LPTI''}.(LPTI' + \overline{LPTI}) = 1$$

dans laquelle les signaux logiques LPTI, LPTI′ et LPTI″ ont la valeur logique "1" lorsque l'amplitude des signaux respectifs PTI, PTI′, et PTI″ est supérieure à leur seuil respectif à la date du test.

Dans la description qui précède, on a présenté un mode d'obtention des signaux PTI′ et PTI″. Selon une variante, ces signaux sont obtenus en prenant la pente, à une date centrée entre les dates $t_{10}$ et $t_{14}$, respectivement $t_9$ et $t_{16}$, du signal codé filtré avec une largeur de bande qui maximalise le rapport entre les écarts d'amplitude à la date des tests et le bruit.

On va maintenant décrire un mode de réalisation d'un régénérateur mettant en oeuvre le procédé de régénération de l'invention en référence à la figure 11. Ce régénérateur comprend un moyen 6 pour réaliser un test d'absence-présence d'impulsion recevant le signal codé SC et des signaux d'horloge $H_1$ à $H_n$, et délivrant n signaux logiques d'absence-présence d'impulsion respectivement en relation avec les signaux $H_1$ à $H_n$. Il comprend en outre un moyen 7 pour réaliser un test de validation de présence d'impulsion recevant le même signal codé SC et les mêmes signaux d'horloge $H_1$ à $H_n$, et délivrant n signaux logiques de validation de présence d'impulsion respectivement en relation avec les signaux $H_1$ à $H_n$. Ce régénérateur comprend également un ensemble 8 de n opérateurs logiques pour effectuer les opérations de validation, un moyen 9 pour inhiber toute détection de présence validée d'impulsion dans les deux positions temporelles suivant la position temporelle dans laquelle la présence validée d'une impulsion est détectée, un moyen 10 pour produire en synchronisme avec le signal d'horloge H, lorsque la présence validée d'une impulsion est détectée dans une position temporelle $P_1$ à $P_n$, un motif binaire $M_1$ à $M_n$ correspondant à ladite position temporelle, la succession de ces motifs binaires formant un signal numérique binaire B identique à celui qui est reçu par le codeur dont est issu le signal codé SC. Ce régénérateur comprend enfin un moyen de récupération d'horloge 11 et une base de temps 12 pour produire les signaux $H_1$ à $H_n$.

Un moyen 6 pour réaliser un test d'absence-présence d'impulsion comprend un filtre passe-bas 13 produisant un signal API appliqué sur l'entrée non inverseuse d'un comparateur 14 dont l'entrée inverseuse reçoit une tension de seuil SAPI issue d'un moyen 15 qui peut par exemple être un potentiomètre ou bien un dispositif de commande automatique de seuil en fonction de l'amplitude du signal SC à l'entrée du régénérateur. Le signal présent en sortie du comparateur 14 est appliqué sur l'entrée D des bascules

maître-esclaves $16_1$ à $16_n$ qui reçoivent sur leur entrée C les signaux $H_1$ à $H_n$ et qui délivrent sur leur sortie Q n signaux logiques d'absence-présence d'impulsion.

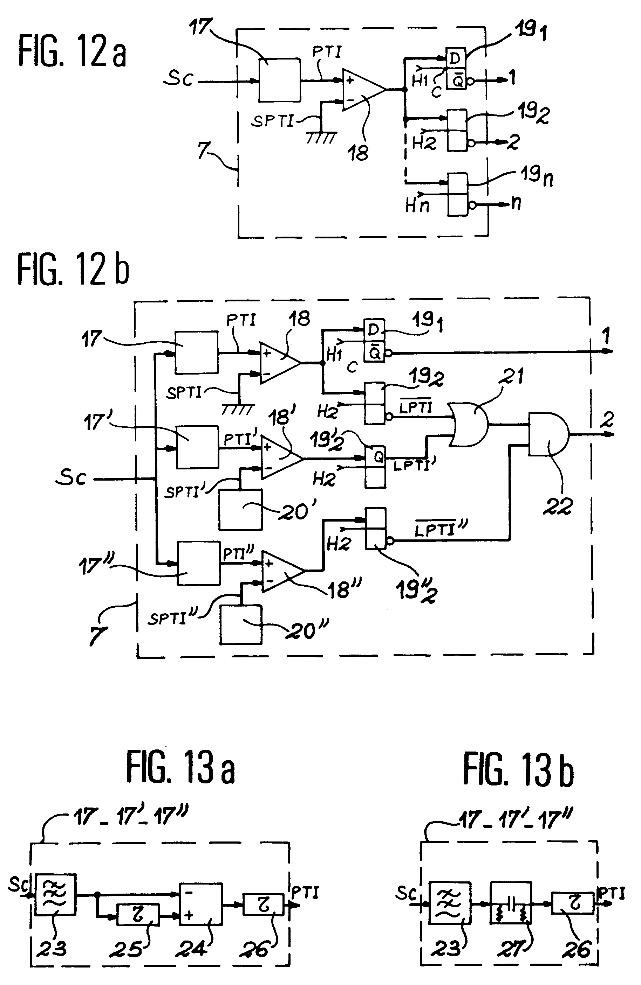

Un moyen 7 pour réaliser un test de validation de présence d'impulsion est représenté sur la figure 12a. Il comprend un moyen 17 recevant le signal codé et produisant un signal PTI qui alimente l'entrée non inverseuse d'un comparateur 18 dont l'entrée inverseuse est reliée à la masse. En effet, on a vu en référence à la figure 8 que la position du seuil SPTI coïncidait avec l'amplitude du signal PTI en absence d'impulsion, cette amplitude étant ici égale à une tension nulle. Le signal délivré sur la sortie du comparateur 18 est appliqué sur l'entrée D des bascules maître-esclaves $19_1$ à $19_n$ qui reçoivent sur leur entrée C les signaux $H_1$ à $H_n$ et qui délivrent sur leur sortie $\overline{Q}$ n signaux logiques de validation de présence d'impulsion.

La figure 12b représente un moyen 7 pour réaliser un test de validation de présence d'impulsion pour la régénération d'un signal codé conforme au signal J de la figure 5 avec une probabilité d'erreur non dégradée. Il comprend des moyens 17, 17′ et 17″ recevant le signal codé SC et produisant respectivement des signaux PTI, PTI′ et PTI″ qui alimentent respectivement l'entrée non inverseuse des comparateurs 18, 18′ et 18″ dont l'entrée inverseuse est reliée respectivement à la masse délivrant la tension de seuil SPTI et aux moyens 20′ et 20″, identiques au moyen 15 délivrant respectivement les tensions de seuil SPTI′ et SPTI″. Le signal délivré sur la sortie du comparateur 18 est appliqué sur l'entrée D des bascules maître-esclaves $19_1$ et $19_2$ reçoivent sur leur entrée C respectivement les signaux $H_1$ et $H_2$, et les signaux délivrés sur chaque sortie des comparateurs 18′ et 18″ sont appliqués respectivement sur chaque entrée D des bascules maître-esclaves $19'_2$ et $19''_2$ qui reçoivent sur leur entrée C le même signal $H_2$. La bascule $19_1$ délivre sur sa sortie $\overline{Q}$ le signal logique de validation de présence d'impulsion dans la position temporelle $P_1$. La porte OU 21 reçoit les signaux logiques $\overline{LPTI}$ et LPTI′ délivrés respectivement sur la sortie Q de la bascule $19_2$ et sur la sortie $\overline{Q}$ de la bascule $19'_2$. La porte ET 22 reçoit le signal de sortie de la porte 21 et le signal logique $\overline{LPTI''}$ délivré sur la sortie $\overline{Q}$ de la bascule $20''_2$ et délivre le signal logique de validation de présence d'impulsion dans la position temporelle $P_2$.

Un moyen 17, respectivement 17′ ou 17″ pour produire un signal PTI, respectivement PTI′ ou PTI″, est représenté sur la figure 13a. Il comprend un filtre passe-bas 23 recevant le signal codé SC et, selon un mode de production du signal PTI, respectivement PTI′ ou PTI″, un amplificateur à entrées différentielles 24 recevant sur son entrée inverseuse le signal codé filtré et sur son entrée non inverseuse ce même signal ayant traversé une ligne à retard 25. On produit ainsi un signal PTI, respectivement PTI′ ou PTI″ en utilisant un retard égal à 2T/n, respectivement environ 7T/8. Le signal PTI, respectivement PTI′ ou PTI″, délivré sur la sortie de l'amplificateur 24 traverse ensuite une ligne à retard 26 afin que sa position temporelle se trouve en conformité avec les signaux d'horloge $H_1$ à $H_n$, respectivement $H_2$. Ces signaux d'horloge sont par ailleurs en conformité avec la position temporelle du signal API.

La figure 13b représente un moyen 17, respectivement 17′ ou 17″, de production d'un signal PTI, respectivement PTI′ ou PTI″, selon un autre mode. Les éléments 24 et 25 sont ici remplacés par un circuit différentiateur 27 qui prélève la pente du signal codé filtré.

On va maintenant expliquer comment on peut réaliser la récupération de l'horloge d'un signal codé selon le procédé de l'invention. Ce signal codé étant constitué d'impulsions qui sont toutes synchrones d'une fréquence n/T, il est possible d'engendrer à partir de ce signal une raie à la fréquence n/T. On peut ensuite obtenir un signal à la fréquence 1/T en divisant par n un signal issu de cette raie à la fréquence n/T. Afin de délivrer un signal d'horloge H ayant une phase correcte, il faut disposer d'une information supplémentaire pour synchroniser la division par n sur la période appropriée du signal à la fréquence n/T.

Lorsque le signal codé est le signal J, K ou L de la figure 5, cette information supplémentaire peut être obtenue en repérant des impulsions séparées par un intervalle de temps caractéristique d'une configuration particulière pour laquelle ces deux impulsions occupent toujours une même position temporelle. Par exemple, dans le cas du signal J, on peut repérer les impulsions espacées de 3T/2, configuration dans laquelle la première impulsion est toujours en position temporelle $P_2$ et la seconde en position temporelle $P_1$. Dans le cas des signaux K ou L, on peut repérer les impulsions espacées de 2T, configuration dans laquelle les deux impulsions sont toujours en position temporelle $P_1$.

Lorsque les motifs binaires dont la présence est détectée sont par exemple "100", "110", "111" et "101", il n'existe plus d'impulsions séparées par on intervalle de temps caractéristique d'une telle configuration particulière. On peut alors obtenir l'information pour synchroniser la division par n sur la période appropriée du signal à la fréquence n/T en comptant le nombre moyen d'impulsions par unité de temps dans chaque position temporelle. En effet, les fréquences moyennes d'occurrence des différents motifs binaires ne sont généralement pas identiques pour un signal numérique aléatoire ou pseudo-aléatoire. Par exemple, dans le cas des motifs binaires "100", "110", "111" et "101", le motif binaire "101" se répète environ 1,5 fois plus souvent que le motif binaire "100". On peut ainsi repérer les différentes positions temporelles en comparant les nombres moyens d'impulsions par unité de temps présentes dans chacune d'elles.

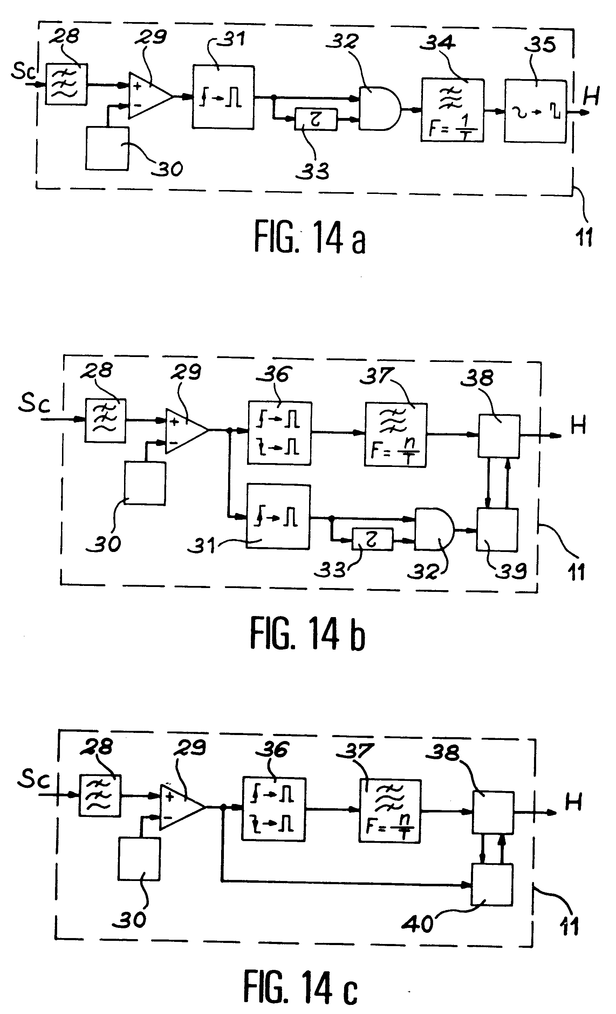

Un mode de réalisation d'un moyen de récupération d'horloge 11 pour un signal codé tel que le signal J, K ou L de la figure 5 est représenté sur la figure 14a. Le signal codé SC est appliqué, après passage dans un filtre passe-bas 28, sur l'entrée non inverseuse d'un comparateur 29 dont l'entrée inverseuse est reliée à un moyen 30, identique au moyen 15, délivrant une tension de seuil. Cette tension de seuil ainsi que la largeur de bande du filtre passe-bas 28 sont ajustées pour minimaliser la gigue affectant les transitions présentes sur la sortie du comparateur 29. Les transitions montantes sont converties en impulsions de durée inférieure ou égale à T/n au moyen du monostable 31. La porte ET 32 reçoit ces impulsions, d'une part directement, et d'autre part après passage dans une ligne à retard 33. Le retard apporté est égal à l'espacement caractéristique à repérer, par exemple 3T/2 dans le cas du signal J et 2T dans le cas du signal K ou L. Ainsi, les impulsions délivrées par la porte ET 32 sont toutes synchrones de l'horloge H et elles forment un signal dont le spectre d'énergie contient une raie à la fréquence H qui est isolée par le moyen 34 qui peut être par exemple un filtre sélectif à bande étroite, un oscillateur synchronisée par injection ou un oscillateur associé à une boucle à verrouillage de phase. Le circuit de mise en forme 35 transforme le signal sinusoïdal à la fréquence 1/T délivré par le moyen 34 en un signal logique d'horloge H.

Le signal d'horloge ainsi obtenu ne présente pas une grande pureté spectrale. En effet, le nombre moyen par unité de temps des impulsions délivrées par la porte 32 est faible devant la fréquence 1/T et, en conséquence, le rapport entre l'énergie de la raie à la fréquence 1/T et l'énergie du spectre au voisinage de cette raie est faible.

Un mode de réalisation d'un moyen de récupération d'horloge 11 procurant une plus grande pureté spectrale est représenté sur la figure 14b. Il comprend les mêmes éléments 28 à 33 que le mode de réalisation de la figure 14a avec, en outre, un monostable 36, qui produit une impulsion de durée inférieure ou égale à T/n pour chaque transition, montante ou descendante, produite par le comparateur 29. On obtient ainsi un signal dont le spectre contient une raie à la fréquence n/T, et le rapport entre l'énergie de cette raie et l'énergie du spectre voisin est ici plus important. Cette raie à la fréquence n/T est ensuite isolée par le moyen 37 qui, de même que le moyen 34, peut être un filtre sélectif à bande étroite, un oscillateur synchronisé par injection ou un oscillateur associé à une boucle à verrouillage de phase. On peut ainsi obtenir un signal à la fréquence 1/T en divisant par n le signal à la fréquence n/T. Cette simple division par n n'est pas suffisante pour produire le signal d'horloge H car il subsiste alors une ambiguïté de phase. Pour lever cette ambiguïté, il faut que la division par n soit synchronisée avec les périodes appropriées du signal à la fréquence n/T. Ces opérations sont réalisées à l'aide d'un diviseur par n référencé 38, associé à un moyen de synchronisation 39 recevant les impulsions délivrées par la porte 32 qui, ainsi qu'on l'a vu précédemment, sont toutes synchrones de l'horloge H. L'action du moyen de synchronisation 39 peut avantageusement être affectée d'une constante de temps d'intégration dans le but d'éviter de perdre la phase correcte de l'horloge en présence d'une seule impulsion en position temporelle erronée sur la sortie de la porte 32.

Un mode de réalisation d'un moyen de récupération d'horloge 11 pour un signal codé dans lequel des impulsions correspondent à des motifs binaires dont les fréquences moyennes d'occurrence sont différentes est représenté sur la figure 14c. Il comprend les mêmes éléments 28, 29, 30, 36, 37, 38 que le mode de réalisation de la figure 14b avec, en outre, un moyen de synchronisation 40, associé au diviseur 38, recevant les impulsions délivrées par le comparateur 29 afin de compter le nombre moyen d'impulsions par unité de temps pour au moins deux positions temporelles pour lesquelles les fréquences moyennes d'occurrence des motifs binaires correspondant ont des valeurs particulièrement éloignées.

## Revendications

1. Procédé de codage par impulsion d'un signal numérique formé de bits occupant chacun un intervalle de temps dit "temps bit", dans lequel on a prédéfini des motifs numériques formés d'une suite prédéfinie de bits, on détecte ces motifs dans le signal à coder, on fait correspondre à chacun des motifs une position dans l'intervalle de temps bit et on émet pour chaque motif détecté une impulsion unique ayant la position correspondante, ce procédé étant caractérisé par le fait que :
   - l'ensemble des motifs numériques prédéfinis ne comprend pas tous les motifs ayant un nombre de bits prédéterminés mais certains motifs à deux et plus de deux bits,
   - on détecte la présence de l'un quelconque de ces motifs sans périodicité fixe prédéterminée mais dès qu'il apparaît dans le signal,
   - lorsqu'un tel motif est détecté on émet une impulsion avec une position temporelle qui correspond à ce motif et lorsqu'aucun motif n'est détecté, aucune impulsion n'est émise,
   - on reporte la prochaine détection de présence éventuelle d'un motif à partir du bit suivant le dernier bit du motif binaire dont la présence a été détectée.

2. Procédé selon la revendication 1, caractérisé en ce que la durée de l'impulsion est prise égale au double de la durée séparant deux positions temporelles adjacentes.

3. Procédé selon la revendication 1, caractérisé en ce que les motifs binaires dont la présence est détectée sont : "10" et "11", ou bien "10", "110" et "111", ou bien "11", "100" et "101" ou bien "10", "11" et un nombre quelconque de "0" consécutifs, ou bien "10", "110", "1110" et "1111", ou bien "100", "110", "111" et "101", ou bien "10", "110", "111" et un nombre quelconque de "0" consécutifs, ou bien "100", "11", "101" et un nombre quelconque de "0" consécutifs.

4. Codeur pour la mise en oeuvre du procédé selon la revendication 1, comprenant un premier moyen (1) recevant un signal numérique formé de bits occupant chacun un intervalle de temps dit "temps bit", caractérisé en ce que ce moyen (1) est apte à détecter, à chaque temps bit, la présence éventuelle d'un motif binaire parmi un nombre quelconque n de motifs binaires, à deux ou plus de deux bits, et caractérisé de plus en ce qu'il comprend un deuxième moyen (2) pour produire, lorsque la présence de l'un quelconque de ces motifs binaires est détectée, une impulsion occupant une position temporelle correspondant audit motif binaire et un troisième moyen (3) pour reporter la prochaine détection de présence éventuelle d'un motif binaire, lorsque la présence d'un motif binaire est détectée, à partir du bit suivant le dernier bit de ce motif binaire, la succession des impulsions ainsi produites formant un signal codé (SC) délivré par le codeur.

5. Décodeur pour la restitution sous forme binaire d'un signal codé selon le procédé conforme à la revendication 1, caractérisé en ce qu'il comprend un premier moyen (4) recevant un signal codé (SC) comprenant une succession d'impulsions occupant une position temporelle parmi n position temporelles possibles, chaque position correspondant à un motif binaire à au moins deux bits parmi n positions temporelles possibles, ce premier moyen (4) étant apte à détecter la présence d'une impulsion occupant une position temporelle parmi les n positions temporelles possibles et un deuxième moyen (5) pour produire, lorsque la présence d'une impulsion est détectée dans une position temporelle déterminée, le motif binaire correspondant à cette position temporelle.

6. Procédé de régénération d'un signal bruité codé selon le procédé conforme à la revendication 1, caractérisé en ce qu'il consiste à :

- recevoir un signal bruité codé (SCa) comprenant une succession d'impulsions occupant une position temporelle (Pm) parmi n positions temporelles, chaque position correspondant à un motif binaire parmi un nombre quelconque n de motifs binaires comprenant au moins deux bits,
- produire un premier signal (API) par un premier filtrage passe bas du signal reçu,
- produire un second signal (PTI) par un second filtrage passe bas du signal reçu,
- effectuer un premier test sur le premier signal (API) pour prendre une décision optimale entre absence et présence d'impulsions, en comparant ce premier signal à une première valeur de seuil (SAPI),
- effectuer un second test sur le second signal afin de prendre une décision optimale entre deux positions temporelles adjacentes, en comparant ce second signal à une seconde valeur de seuil (SPTI),
- selon les résultats des premier et second tests, déterminer la présence d'une impulsion et sa position temporelle et l'on restitue le motif binaire correspondant à cette position temporelle.

7. Procédé selon la revendication 6, caractérisé en ce que le deuxième signal est obtenu en effectuant la différence entre les amplitudes du signal codé préalablement filtré, à deux dates espacées d'une durée égale à la durée d'une impulsion du signal codé.

8. Procédé selon la revendication 6, caractérisé en ce que le deuxième signal est obtenu en prélevant la pente du signal codé préalablement filtré.

9. Régénérateur pour la mise en oeuvre du procédé selon la revendication 6, caractérisé en ce qu'il comprend un premier moyen (6) recevant un signal codé bruité (SCa) comprenant une succession d'impulsions occupant une position temporelle parmi n positions temporelles possibles, chaque position correspondant à un motif binaire parmi un nombre quelconque n de motifs binaires à au moins deux bits, ce premier moyen (6) étant apte à réaliser un premier test d'absence-présence d'impulsion pour chacune des n positions temporelles, un deuxième moyen (7) pour réaliser un second test , de validation de présence d'impulsion, pour chacune des n positions temporelles, un ensemble de n opérateurs logiques (8) pour effectuer le test de validation, un moyen (9) pour inhiber toute détection de présence validée d'impulsion dans les deux positions temporelles suivant la position temporelle dans laquelle la présence validée d'une impulsion est détectée, un troisième moyen (10) pour produire, lorsque la présence validée d'une impulsion est détectée dans une position temporelle, un motif binaire correspondant à cette position temporelle, un quatrième moyen (11) de récupération de l'horloge du signal transmis et une base de temps (12) pour produire les signaux de commande des premier et second tests d'absence-présence d'impulsion et de validation de présence d'impulsion pour chacune des n positions temporelles.

10. Régénérateur selon la revendication 9, caractérisé en ce que le premier moyen (6) pour réaliser un test d'absence-présence d'impulsion pour chacune des n positions temporelles comprend un filtre passe-bas (13) recevant le signal codé, un comparateur (14) recevant sur son entrée non inverseuse le signal codé filtré et sur son entrée inverseuse une tension de seuil délivrée par un moyen (15), et alimentant l'entrée D de n bascules maître-esclaves ($16_i$ à $16_n$).

11. Régénérateur selon la revendication 9, caractérisé en ce que le deuxième moyen (7) pour réaliser un test de validation de présence d'impulsion pour chacune des n positions temporelles comprend un moyen (17) recevant le signal codé et produisant un signal apte à la réalisation d'un test de validation de présence d'impulsion qui alimente l'entrée non inverseuse d'un comparateur (18) dont l'entrée inverseuse est reliée à la masse, et n bascules maître-esclaves ($19_1$ à $19_n$) dont l'entrée D est alimentée par le comparateur (18).

12. Régénérateur selon la revendication 9, dans lequel n=2, caractérisé en ce que le moyen (7) pour réaliser un test de validation de présence d'impulsion pour chacune des deux positions temporelles comprend des moyens (17, 17' et 17") recevant le signal codé et produisant des signaux aptes à la réalisation d'un test de validation de présence d'impulsion qui alimentent l'entrée non inverseuse de comparateurs (respectivement 18, 18' et 18") dont l'entrée inverseuse est reliée respectivement à la masse et à des moyens (20' et 20") délivrant des tensions de seuil, deux bascules maître-esclaves ($19_1$ et $19_2$) dont l'entrée D est alimentée par le comparateur (18) et deux bascules maître-esclaves ($19'_2$ et $19''_2$) dont l'entrée D est alimentée par les comparateurs (respectivement 18' et 18"), une porte OU (21) dont une entrée est reliée à la sortie $\overline{Q}$ de la bascule ($19_2$) et l'autre entrée à la sortie Q de la bascule ($19'_2$), une porte ET (22) dont une entrée est reliée à la sortie de la porte OU (21) et l'autre entrée à la sortie $\overline{Q}$ de la bascule ($19''_2$).

13. Régénérateur selon l'une quelconque des revendications 11 et 12, caractérisé en ce que le moyen (17, 17' ou 17") pour produire un signal apte à la réalisation d'un test de validation de présence d'impulsion, comprend un filtre passe-bas (23) recevant le signal codé, un amplificateur à entrées différentielles (24) recevant sur son entrée inverseuse le signal codé filtré et sur son entrée non inverseuse ce même signal ayant traversé une ligne à retard (25), et délivrant un signal traversant une ligne à retard (26).

14. Régénérateur selon l'une quelconque des revendications 11 et 12, caractérisé en ce que le moyen (17, 17' ou 17"), pour produire un signal apte à la réalisation d'un test de validation de présence d'impulsion comprend les mêmes éléments (23 et 26) que le moyen (17, 17' ou 17"), selon la revendication 13, avec en outre un circuit différentiateur (27).

15. Régénérateur selon la revendication 9, caractérisé en ce que le moyen (11) de récupération de l'horloge du signal transmis comprend un filtre passe-bas (28) recevant le signal codé, un comparateur (29) dont l'entrée non inverseuse reçoit le signal codé filtré et l'entrée inverseuse une tension de seuil délivrée par un moyen (30), et alimentant un monostable (31) délivrant une impulsion pour chaque transition montante, une porte ET (32) recevant sur une entrée le signal délivré par le monostable (31) et sur l'autre entrée ce même signal ayant traversé une ligne à retard (33), et un moyen de filtrage sélectif à bande étroite (34) relié à la sortie de la porte ET (32) et suivi d'un circuit de mise en forme (35).

16. Régénérateur selon la revendication 9, caractérisé en ce que le moyen (11) de récupération de l'horloge du signal transmis comprend un filtre passe-bas (28) recevant le signal codé, un comparateur (29) dont l'entrée non inverseuse reçoit le signal codé filtré et l'entrée inverseuse une tension de seuil délivrée par un moyen (30), et alimentant un premier monostable (31) délivrant une impulsion pour chaque transition montante, une porte ET (32) recevant sur une entrée le signal délivré par le monostable (31) et sur l'autre entrée, ce même signal ayant traversé une ligne à retard (33), et un second monostable (36) relié au comparateur (29) et délivrant une impulsion pour chaque transition montante et chaque transition descendante, un moyen de filtrage sélectif à bande étroite (37) relié au second monostable (36), un diviseur par n (38) relié au moyen de filtrage sélectif (37) et associé à un moyen de synchronisation (39) recevant le signal délivré par la porte ET (32).

13

17. Régénérateur selon la revendication 9, caractérisé en ce que le moyen (11) de récupération de l'horloge du signal transmis comprend un filtre passe-bas (28) recevant le signal codé, un comparateur (29) dont l'entrée non inverseuse reçoit le signal codé filtré et l'entrée inverseuse une tension de seuil délivrée par un moyen (30), un monostable (36) relié à la sortie du comparateur (29) et délivrant une impulsion pour chaque transition montante et chaque transition descendante, un moyen de filtrage sélectif à bande étroite (37) relié au monostable (36), un diviseur par n (38) relié au moyen de filtrage sélectif (37) et un moyen de synchronisation (40) associé au diviseur (38) et recevant le signal délivré par le comparateur (29).

**Patentansprüche**

1. Impulscodierungsverfahren für ein digitales Signal, gebildet durch Bits, jedes ein "Bit-Zeit" genanntes Zeitintervall einnehmend, bei dem man digitale Muster vorbestimmt hat, gebildet durch eine vorbestimmte Folge von Bits, man diese Muster feststellt in dem zu codierenden Signal, man jedem dieser Muster eine Position in dem Bit-Zeit-Intervall entsprechen läßt und man für jedes festgestellte Muster einen einzigen Impuls sendet, der die entsprechende Position hat, wobei dieses Verfahren **dadurch gekennzeichnet** ist:
   - daß die Gesamtheit der vorbestimmten digitalen Muster nicht alle Muster umfaßt, die eine Anzahl vorbestimmter Bits haben, sondern gewisse Muster mit zwei und mehr als zwei Bits,
   - daß man das Vorhandensein von irgendeinem dieser Muster ohne vorbestimmte feste Periodizität feststellt, sondern sobald es in dem Signal erscheint,
   - daß, wenn ein solches Muster festgestellt wird, man einen Impuls mit einer temporären Position sendet, die diesem Muster entspricht und, wenn kein Muster festgestellt wird, kein Impuls gesendet wird,
   - daß man die nächste Feststellung des eventuellen Vorhandenseins eines Musters verschiebt ab - bzw. bis zu - dem Bit, das dem letzten Bit des Binärmusters folgt, dessen Vorhandensein festgestellt wurde.

2. Verfahren nach Anspruch 1, dadurch gekennzeichnet, daß die Dauer des Impulses gleich dem Doppelten der Dauer genommen wird, die zwei benachbarte temporäre Positionen trennt.

3. Verfahren nach Anspruch 1, dadurch gekennzeichnet, daß die Binärmuster, deren Vorhandensein festgestellt wird, folgende sind: "10" und "11", oder auch 10", "110" und "111", oder auch "11", "100" und "101" oder auch "10", "11" und eine beliebige Anzahl von aufeinanderfolgenden "0", oder auch "10", "110", "1110" und "1111", oder auch "100", "110", "111" und "101", oder auch "10", "110", "111" und eine beliebige Anzahl von aufeinanderfolgenden "0", oder auch "100", "11", "101" und eine beliebige Anzahl von aufeinanderfolgenden "0".

4. Codierer für die Anwendung des Verfahrens nach Anspruch 1, umfassend eine erste Einrichtung (1) zum Empfang eines digitalen Signals, gebildet durch Bits, von denen jedes ein "Bit-Zeit" genanntes Zeitintervall besetzt, dadurch gekennzeichnet, daß diese Einrichtung (1) geeignet ist, in jeder Bit-Zeit das eventuelle Vorhandensein, unter einer beliebigen Anzahl von n Binärmustern, eines Binärmusters mit zwei oder mehr als zwei Bits festzustellen, und außerdem dadurch gekennzeichnet, daß er eine zweite Einrichtung (2) umfaßt, um - wenn das Vorhandensein von irgendeinem von diesen Mustern festgestellt wird - einen Impuls zu erzeugen, der eine temporäre Position einnimmt, die dem genannten Binärmuster entspricht, und eine dritte Einrichtung (3), um - wenn das Vorhandensein eines Binärmusters festgestellt wird - die nächste Feststellung des eventuellen Vorhandenseins eines Binärmusters zu verschieben bis zu dem Bit, das dem letzten Bit dieses Binärmusters folgt, wobei die Folge der derart erzeugten Impulse ein durch den Codierer geliefertes Signal (SC) bildet.

5. Decodierer für die Wiederherstellung in binärer Form eines Signals, codiert nach dem Verfahren nach Anspruch 1, dadurch gekennzeichnet, daß er eine erste Einrichtung (4) umfaßt, die ein codiertes Signal (SC) empfängt, das eine Impulsfolge umfaßt, die eine temporäre Position von n möglichen temporären Positionen einnimmt, wobei jede Position einem Binärmuster mit wenigstens zwei Bits unter n möglichen temporären Positionen entspricht und diese erste Einrichtung (4) das Vorhandensein von einem Impuls feststellen kann, der eine temporäre Position von den n möglichen temporären Positionen einnimmt, und eine zweite Einrichtung (5), um - wenn das Vorhandensein eines Impulses in einer bestimmten temporären Position entdeckt wird - das dieser temporären Position entsprechende Binärmuster herzustellen.

6. Verfahren zum Regenerieren eines verrauschten Signals, codiert nach dem Verfahren nach Anspruch 1, dadurch gekennzeichnet, daß es besteht im :

- Empfangen eines verrauschten codierten Signals (SCa), das eine Impulsfolge umfaßt, die eine temporäre Position (Pm) von n temporären Positionen einnimmt, wobei jede Position einem Binärmuster unter einer beliebigen Anzahl n von wenigstens zwei Bits umfassenden Binärmustern entspricht,
- Erzeugen eines ersten Signals (API) durch ein erstes Tiefpaßfiltern des empfangenen Signals,
- Erzeugen eines zweiten Signals (PTI) durch ein zweites Tiefpaßfiltern des empfangenen Signals,
- Durchführen eines ersten Tests an dem ersten Signal (API), um eine optimale Entscheidung zu treffen zwischen Nichtvorhandensein und Vorhandensein von Impulsen durch Vergleichen dieses ersten Signals mit einem Schwellenwert (SAPI)
- Durchführen eines zweiten Tests an dem zweiten Signal, um eine optimale Entscheidung zu treffen zwischen zwei benachbarten temporären Positionen, indem dieses zweite Signal verglichen wird mit einem zweiten Schwellenwert (SPTI),
- Bestimmen des Vorhandenseins eines Impulses und seiner temporären Position nach den Resultaten aus dem ersten und dem zweiten Test und Wiederherstellen des dieser temporären Position entsprechenden Binärmusters.

7. Verfahren nach Anspruch 6, dadurch gekennzeichnet, daß man das zweite Signal erhält aus der Differenz zwischen den Amplituden des vorhergehend gefilterten codierten Signals zu zwei Zeitpunkten, die um eine Dauer beabstandet sind, die gleich der Dauer eines Impulses des codierten Signals ist.

8. Verfahren nach Anspruch 6, dadurch gekennzeichnet, daß man das zweite Signal erhält, indem man die Flanke des vorher gefilterten codierten Signals abnimmt.

9. Regenerationsschaltung zur Durchführung des Verfahrens nach Anspruch 6, dadurch gekennzeichnet, daß sie umfaßt: eine erste Einrichtung (6), die ein verauschtes codiertes Signal (SCa) empfängt, das eine Impulsfolge umfaßt, die eine temporäre Position von n möglichen temporären Positionen einnimmt, wobei jede Position einem Binärmuster aus einer beliebigen Anzahl Binärmustern mit wenigstens zwei Bits entspricht und diese ersten Einrichtungen (6) geeignet sind, einen ersten Test bezüglich des Nichtvorhandenseins-Vorhandenseins eines Impulses durchzuführen für jede der n temporären Positionen, eine zweite Einrichtung (7) zur Durchführung eines zweiten Tests der Validierung des Vorhandenseins eines Impulses für jede der n temporären Positionen, eine Anordnung von n logischen Schaltungen (8), um den Validierungstest durchzuführen, eine Einrichtung (9), um jede validierte Feststellung des Vorhandenseins eines Impulses zu hemmen bzw. zu sperren in den beiden temporären Positionen, die der temporären Position folgen, in der das validierte Vorhandensein eines Impulses festgestellt wird, eine dritte Einrichtung (10), um - wenn das validierte Vorhandensein eines Impulses in einer temporären Position festgestellt wird - ein dieser temporären Position entsprechendes Binärmuster zu erzeugen, eine vierte Einrichtung (11) zur Wiedergewinnung des Taktes des übertragenen Signals und eine Zeitbasis (12) zur Erzeugung der Steuersignale des ersten und des zweiten Tests bezüglich des Nichtvorhandenseins-Vorhandenseins eines Impulses und der Validierung des Vorhandenseins eines Impulses für jede der n temporären Positionen.

10. Regenerationsschaltung nach Anspruch 9, dadurch gekennzeichnet, daß die erste Einrichtung (6) zur Durchführung eines Impuls-Nichtvorhandensein-Vorhandensein-Tests für jede der n temporären Positionen ein Tiefpaßfilter (13) umfaßt, das das codierte Signal empfängt, und einen Komparator (14), der an seinem nichtinvertierenden Eingang das gefilterte codierte Signal empfängt und an seinem invertierenden Eingang eine Schwellenspannung, geliefert durch eine Einrichtung (15), und der den Eingang D von n Master-Slave-Kippschaltungen ($16_1$ bis $16_n$) speist.

11. Regenerationsschaltung nach Anspruch 9, dadurch gekennzeichnet, daß die zweiten Einrichtungen (7) zur Durchführung eines Tests der Validierung des Vorhandenseins eines Impulses für jede der n temporären Positionen eine Einrichtung (17) umfaßt, die das codierte Signal empfängt und ein Signal erzeugt, das geeignet ist zur Durchführung eines Tests der Validierung des Vorhandenseins eines Impulses, der den nichtinvertierenden Eingang eines Komparators (18) speist, dessen invertierender Eingang mit der Masse verbunden ist, und n Master-Slave-Kippschaltungen ($19_1$ bis $19_n$), deren Eingang D gespeist wird durch den Komparator (18).

12. Regenerationsschaltung nach Anspruch 9, mit n=2, dadurch gekennzeichnet, daß die Einrichtungen (7) zur Durchführung eines Tests der Validierung des Vorhandenseins eines Impulses für jede der beiden temporären Positionen umfassen: Einrichtungen (17, 17' und 17''), die das codierte Signal empfangen und Signale erzeugen, die geeignet sind zur Durchführung eines Tests der Validierung des Vorhandenseins eines Impulses, der den nichtinvertierenden Eingang der Komparatoren (jeweils 18, 18' und 18'') speist, deren invertierender Eingang mit der Masse verbunden ist beziehungsweise mit Einrichtungen (20', 20''), die Schwellenspannungen liefern, zwei Master-Slave-Kippschaltungen ($19_1$ und $19_2$), deren Eingang D gespeist wird durch den Komparator (18) und zwei Master-Slave-Kippschaltungen ($19'_2$ und $19''_2$), deren Eingang D gespeist wird durch die Komparatoren (18' bzw. 18''), ein ODER-Glied (21), von dem ein Eingang verbunden ist mit dem Ausgang $\overline{Q}$ der Kippschaltung ($19_2$) und der andere Eingang mit dem Ausgang Q der Kippschaltung ($19'_2$), ein UND-Glied (22), von dem ein Eingang verbunden ist mit dem Ausgang des ODER-Glieds (21) und der andere Eingang mit dem Ausgang $\overline{Q}$ der Kippschaltung ($19''_2$).

13. Regenerationsschaltung nach einem der Ansprüche 11 und 12, dadurch gekennzeichnet, daß die Einrichtung (17, 17' oder 17'') zur Erzeugung eines Signals, das geeignet ist zur Durchführung eines Validierungstests des Vorhandenseins eines Impulses, ein Tiefpassfilter (23) umfaßt, das ein codiertes Signal empfängt, und einen Verstärker (24) mit Differentialeingang, der auf seinem invertierenden Eingang das gefilterte codierte Signal empfängt und auf seinem nichtinvertierenden Eingang dasselbe Signal nach dem Durchlaufen eines Verzögerungskreises (25) und ein Signal liefert, das einen Verzögerungskreis (26) durchläuft.

14. Regenerationsschaltung nach einem der Ansprüche 11 und 12, dadurch gekennzeichnet, daß die Einrichtung (17, 17' oder 17'') zur Erzeugung eines Signals, das geeignet ist zur Durchführung eines Validierungstests des Vorhandenseins eines Impulses dieselben Elemente (23 und 26) umfaßt wie die Einrichtung (17, 17' oder 17'') nach dem Anspruch 13, mit außerdem einem Differenzierer (27).

15. Regenerationsschaltung nach Anspruch 9, dadurch gekennzeichnet, daß die Einrichtung (11) zur Wiedergewinnung des Takts des übertragenen Signals umfaßt: ein Tiefpaßfilter (28), das das codierte Signal empfängt, einen Komparator (29), dessen nichtinvertierender Eingang das gefilterte codierte Signal empfängt und der invertierende Eingang eine Schwellenspannung, geliefert durch eine Einrichtung (30), und der eine monostabile Kippschaltung (31) speist, die einen Impuls liefert für jeden ansteigenden Übergang, ein UND-Glied (32), das auf einem Eingang das durch die monostabile Kippschaltung (31) gelieferte Signal empfängt und auf dem anderen Eingang dasselbe Signal nach dem Durchlaufen eines Verzögerungskreises (33), und eine Schmalband-Selektivfiltereinrichtung (34), verbunden mit dem Ausgang des UND-Glieds (32) und gefolgt von einer Impulsformerschaltung (35).

16. Regenerationsschaltung nach Anspruch 9, dadurch gekennzeichnet, daß die Einrichtung (11) zur Wiedergewinnung des Takts des übertragenen Signals umfaßt: ein Tiefpaßfilter (28), das das codierte Signal empfängt, einen Komparator (29), dessen nichtinvertierender Eingang das gefilterte codierte Signal empfängt und der invertierende Eingang eine Schwellenspannung, geliefert durch eine Einrichtung (30), und der eine monostabile Kippschaltung (31) speist, die einen Impuls liefert für jeden ansteigenden Übergang, ein UND-Glied (32), das auf einem Eingang das durch die monostabile Kippschaltung (31) gelieferte Signal empfängt und auf dem anderen Eingang dasselbe Signal nach dem Durchlaufen eines Verzögerungskreises (33), und eine zweite monostabile Kippschaltung (36), verbunden mit dem Komparator (29) und einen Impuls liefernd für jeden ansteigenden Übergang und jeden absteigenden Übergang, eine Schmalband-Selektivfiltereinrichtung (37), verbunden mit der zweiten monostabilen Kippschaltung (36), einen Teiler durch n (38), verbunden mit der Selektivfiltereinrichtung (37) und einer Synchronisationseinrichtung (39) zugeordnet, die das durch das UND-Glied (32) gelieferte Signal empfängt.

17. Regenerationsschaltung nach Anspruch 9, dadurch gekennzeichnet, daß die Einrichtung (11) zur Wiedergewinnung des Taktes des übertragenen Signals umfaßt: ein Tiefpaßfilter (28), das das codierte Signal empfängt, einen Komparator (29), dessen nichtinvertierender Eingang das gefilterte codierte Signal empfängt und der invertierende Eingang eine Schwellenspannung, geliefert durch eine Einrichtung (30), eine monostabile Kippschaltung (36), verbundem mit dem Ausgang des Komparators (29) und einen Impuls liefernd für jeden ansteigenden Übergang und jeden absteigenden Übergang, eine Schmalband-Selektivfiltereinrichtung (37), verbunden mit der monostabilen Kippschaltung (36), einen Teiler durch n (38), verbunden mit der Selektivfiltereinrichtung (37) und eine Synchronisationseinrichtung (40), die dem Teiler (38) zugeordnet ist und das Signal empfängt, das geliefert wird durch den Komparator (29).

## Claims

1. Method for coding by pulse a digital signal formed from bits each occupying a time interval called the "bit time", in which prior definition has taken place of the digital patterns formed from a previously defined sequence of bits, said patterns are detected in the signal to be coded, with each of the patterns is made to correspond a position in the bit time interval and for each detected pattern is emitted a single pulse having the corresponding position, said method being characterized in that:
   - all the previously defined digital patterns do not include all the patterns having a number of predetermined bits, but certain patterns having two or more than two bits,
   - detection takes place of the presence of any random one of these patterns without any predetermined fixed periodicity, but as soon as it appears in the signal,
   - when such a pattern is detected emission takes place of a pulse with a time position corresponding to said pattern and when no pattern is detected no pulse is emitted,
   - postponement takes place of the next detection of the possible presence of a bit starting from the bit following the last bit of the binary pattern whose presence has been detected.

2. Method according to claims 1, characterized in that the period of the pulse is taken as equal to double the period separating two adjacent temporal positions.

3. Method according to claim 1, characterized in that the binary patterns, whose presence is detected, are: "10" and "11", or "10", "110" and "111", or "11", "100" and "101", or "10", "11" and any number of consecutive "0's", or "10", "110", "1110" and "1111", or "100", "110", "111" and "101", or "10", "110", "111" and any number of consecutive "0's", or "100", "11", "101" and any number of consecutive "0's".

4. Coder for performing the method according to claim 1 comprising a first means (1) receiving a digital signal formed from bits each occupying a time interval called the "bit time", characterized in that said means (1) able to detect, for each bit time, the possible presence of a binary pattern among a random number of n binary patterns with two or more than two bits and also characterized in that it comprises a second means (2) for producing, when the presence of a random one of said binary patterns is detected, a pulse occupying a time position corresponding to said binary pattern and a third means (3) for postponing the next detection of the possible presence of a binary pattern, when the presence of a binary pattern is detected, as from the bit following the last bit of said binary pattern, the succession of pulses produced in this way forming a coded signal (SC) supplied by the coder.

5. Decoder for the restoration in binary form of a signal coded according to the method of claim 1, characterized in that it comprises a first means (4) receiving a coded signal (SC) having a succession of pulses occupying one time position among n possible time positions, each position corresponding to a binary pattern having at least two bits among n possible time positions, said first means (4) being able to detect the presence of a pulse occupying one time position among n possible time positions and a second means (5) for producing, when the presence of a pulse is detected in a given time position, the binary pattern corresponding to said time position.

6. Method for regenerating a noisy signal coded according to the method of claim 1, characterized in that it consists of:
   - receiving a coded noisy signal (SCa) comprising a succession of pulses occupying a time position (Pm) among n time positions, each position corresponding to a binary pattern from among a random number n of binary patterns having at least two bits,
   - producing a first signal (API) by a first low pass filtering of the signal received,
   - producing a second signal (PTI) by a second low pass filtering of the signal received,
   - performing a first test on the first signal (API) for taking an optimum decision between the absence and presence of pulses by comparing said first signal with a first threshold value (SAPI),
   - performing a second test on the second signal in order to take an optimum decision between two adjacent time positions by comparing said second signal with a second threshold value (SPTI),
   - on the basis of the results of the first and second tests determining the presence of a pulse and its time position and restoration takes place of the binary pattern corresponding to said time position.

7. Method according to claim 6, characterized in that the second signal is obtained by forming the difference between the amplitudes of the previously filtered coded signal with two dates spaced by a time equal to the duration of a pulse of the coded signal.

8. Method according to claim 6, characterized in that the second signal is obtained by sampling the gradient of the previously filtered coded signal.

9. Regenerator for performing the method according to claim 6, characterized in that it comprises a first means (6) receiving a noisy coded signal (SCa) having a succession of pulses occupying one time position from among n possible time positions, each position corresponding to one binary pattern from among a random number n of binary patterns having at least two bits, said first means (6) being able to perform a first pulse absence-presence test for each of the n time positions, a second means (7) for performing a second test for validating the presence of a pulse for each of the n time positions, an array of n logic operators (8) for performing the validation test, a means (9) for inhibiting any pulse validated presence detection in the two time positions in accordance with the time position in which the validated presence of a pulse is detected, a third means (10) for producing, when the validated presence of a pulse is detected in a time position, a binary pattern corresponding to said time position, a fourth means (11) for the recovery of the clock of the transmitted signal and a time base (12) for producing control signals of the first and second pulse absence-presence tests and for the validation of the presence of a pulse for each of the n time positions.

10. Regenerator according to claim 9, characterized in that the first means (6) for performing a pulse absence-presence test for each of the n time positions comprises a low pass filter (13) receiving the coded signal, a comparator (14) receiving on its non-inverting input the filtered coded signal and on its inverting input a threshold voltage supplied by a means (15) and supplying the input D of n master-slave flip-flips ($16_1$ to $16_n$).

11. Regenerator according to claim 9, characterized in that the second means (7) for performing a validation test for the presence of a pulse for each of the n time positions comprises a means (17) receiving the coded signal and producing a signal suitable for the implementation of a pulse presence validation test, which supplies the non-inverting input of a comparator (18), whose inverting input is connected to earth and n master-slave flip-flops ($19_1$ to $19_n$), whose input D is supplied by the comparator (18).

12. Regenerator according to claim 9 in which n=2, characterized in that the means (7) for performing a pulse presence validation test for each of the two time positions comprises means (17, 17' and 17") receiving the coded signal and producing signals appropriate for performing a pulse presence validation test, which supply the non-inverting input of comparators (respectively 18, 18' and 18"), whose inverting input is respectively connected to earth and to means (20' and 20") supplying threshold voltages, two master-slave flip-ffops ($19_1$, $19_2$), whose input D is supplied by the comparator (18) and two master-slave flip-flops ($19'_2$ and $19"_2$), whose input D is supplied by comparators (respectively 18' and 18"), an OR gate (21), whereof one input is connected to the output $\overline{Q}$ of the flip-flop ($19_2$) and the other input to the output Q of the flip-flop ($19'_2$), an AND gate (22), whereof one input is connected to the output of the OR gate (21) and the other input to the output Q of the flip-flop ($19"_2$).

13. Regenerator according to either of the claims 11 and 12, characterized in that the means (17, 17' or 17") for producing a signal appropriate for performing a pulse presence validation test comprises a low-pass filter (23) receiving the coded signal, an amplifier having differential inputs (24) receiving on its inverting input the filtered coded signal and on its non-inverting input said same signal which has traversed a lag line (25) and supplying a signal traversing a lag line (26).

14. Regenerator according to either of the claims 11 and 12, characterized in that the means (17, 17' or 17") for producing a signal appropriate for performing a pulse presence validation test comprises the same elements (23, 26) as the means (17, 17' or 17"), according to claim 13, with in addition a differentiating circuit (27).

15. Regenerator according to claim 9, characterized in that the means (11) for recovering the clock of the transmitted signal comprises a low-pass filter (28) receiving the coded signal, a comparator (29), whose non-inverting input receives the filtered coded signal and the inverting input a threshold voltage supplied by a means (30) and supplying a monostable flip-flop (31) supplying a pulse for each rising transition, an AND gate (32) receiving on one input the signal supplied by the monostable flip-flop (31) and on the other input the same signal which has passed through a lag line (33), and a narrow band selective filtering means (34) connected to the output of the AND gate (32) and followed by a shaping circuit (35).

16. Regenerator according to claim 9, characterized in that the means (11) for recovering the clock of the transmitted signal comprises a low-pass filter (28) receiving the coded signal, a comparator (29), whose non-inverting input receives the filtered coded signal and the inverting input a threshold voltage supplied by a means (30) and supplying a first monostable flip-flop (31) supplying a pulse for each rising transition, an AND gate (32) receiving on one input the signal supplied by the monostable flip-flop (31) and on the other input said same signal which has traversed a lag line (33) and a second monostable flip-flop (36) connected to the comparator (29) and supplying a pulse for each rising transition and each falling transition, a narrow band selective filtering means (37) connected to the second monostable flip-flop (36), a divider by n (38) connected to the selective filtering means (37) and associated with a synchronization means (39) receiving the signal supplied by the AND gate (32).

17. Regenerator according to claim 9, characterized in that the means (11) for recovering the clock of the transmitted signal comprises a low-pass filter (28) receiving the coded signal, a comparator (29), whose non-inverting input receives the filtered coded signal and the inverting input a threshold voltage supplied by a means (30), a monostable flip-flop (36) connected to the output of the comparator (29) and supplying a pulse for each rising transition and each falling transition, a narrow band selective filtering means (37) connected to the monostable flip-flop (36), a divider by n (38) connected to the selective filtering means (37) and a synchronization means (40) associated with the divider (38) and receiving the signal supplied by the comparator (29).

FIG. 1

FIG. 2

FIG. 3

FIG. 4

FIG. 5

EP 0 419 337 B1

FIG. 6

FIG. 7

FIG. 8

FIG. 9b

FIG. 9a

22

FIG. 10

FIG. 11

FIG. 12 a

FIG. 12 b

FIG. 13 a

FIG. 13 b

FIG. 14 a

FIG. 14 b

FIG. 14 c